# EUROPEAN PATENT APPLICATION

(11) **EP 4 787 958 A1**
(43) Date of publication of application: **05.08.2026**
(21) Application number: 23953843.2
(22) Date of filing: 28.09.2023
(51) Int. Cl.: H04W 36/00

(54) **RESOURCE DETERMINATION METHOD, TERMINAL, NETWORK DEVICE, AND COMMUNICATION SYSTEM**

(71) Applicant: Beijing Xiaomi Mobile Software Co., Ltd., Beijing 100085 (CN)
(72) Inventor: LUO, Xingyi, Beijing 100085 (CN)
(74) Representative: Gunzelmann, Rainer
(86) International application number: PCT/CN2023/123015
(87) International publication number: WO 2025/065699

(57) **Abstract**

The present disclosure relates to a resource determination method, a terminal, a network device, and a communication system. The method comprises: a terminal receiving first information sent by a serving cell, the first information being used for configuring a first grant-free physical uplink shared channel time-frequency resource CGO of one or more candidate cells; and on the basis of the first information, determining a second CGO of a target cell. The second CGO is used by the terminal to send second information to the target cell, the target cell is a target cell for a cell handover selected, on the basis of measurement results of each beam, by the serving cell from the one or more candidate cells, and the second information is used for indicating acknowledgement by the terminal of a handover to the target cell. By means of embodiments of the present disclosure, during a cell handover process, an acknowledgement message can be sent to a target cell to access the target cell so as to complete the handover.

## Description

### TECHNICAL FIELD

The disclosure relates to the field of communication technology, and in particular to a method for determining a resource, a terminal, a network device, and a communication system.

### BACKGROUND

In layer 1/layer 2 (L1/L2) based inter-cell mobility (LTM), to reduce the overhead of switching time, it is considered to measure timing advance (TA) information from a user to candidate cell(s) in advance, so as to avoid accessing a target cell via a random access during switching, and data may be directly sent to the target cell. In this process, when the user sends data to the target cell for the first time, specific information needs to be sent to the target cell for the target cell to determine the access by the user.

During the cell switching process, it is necessary to configure a resource for a terminal to send data, i.e., a confirmation [or access] message, to the target cell for the first time.

### SUMMARY

In a case that a terminal fails to transmit data to a target cell for the first time for the network device, how a user should determine a selection of a retransmission resource. Embodiments of the disclosure provide a method for determining a resource, a terminal, a network device, and a communication system to solve the above technical problem.

According to a first aspect of embodiments of the disclosure, a method for determining a resource is provided. The method includes: receiving, by a terminal, first information sent by a serving cell, in which the first information is used to configure a first configured grant occasion (CGO) for one or more candidate cells; and determining, based on the first information, a second CGO for a target cell, in which the second CGO is configured for the terminal to send second information to the target cell, in which the target cell is a cell selected by the serving cell from the one or more candidate cells for cell switching based on one or more beam measurement results, and the second information indicates that the terminal confirms switching to the target cell.

According to a second aspect embodiments of the disclosure, a method for determining a resource is provided. The method includes: sending first information to a terminal, in which the first information is used to configure a first CGO for one or more candidate cells; and selecting, based on one or more beam measurement results, a target cell from the one or more candidate cells for cell switching, in which the target cell corresponds to a second CGO, the second CGO is configured for the terminal to send second information to the target cell, and the second information indicates that the terminal confirms switching to the target cell.

According to a third aspect of embodiments of the disclosure, a method for determining a resource is provided. The method includes: receiving, by a terminal, first information sent by a serving cell, in which the first information is used to configure a first CGO for one or more candidate cells; determining, by the terminal, based on the first information, a second CGO for a target cell, in which the second CGO is configured for the terminal to send second information to the target cell, in which the target cell is a cell selected by the serving cell from the one or more candidate cells for cell switching based on one or more beam measurement results, and the second information indicates that the terminal confirms switching to the target cell.

According to a fourth aspect of embodiments of the disclosure, a terminal is provided. The terminal includes: a transceiver module, configured to receive first information sent by a serving cell, in which the first information is used to configure a first CGO for one or more candidate cells; and a processing module, configured to determine, based on the first information, a second CGO for a target cell, in which the second CGO is configured for the terminal to send second information to the target cell, in which the target cell is a cell selected by the serving cell from the one or more candidate cells for cell switching based on one or more beam measurement results, and the second information indicates that the terminal confirms switching to the target cell.

According to a fifth aspect of embodiments of the disclosure, a network device is provided. The network device includes: a transceiver module, configured to send first information to a terminal, in which the first information is used to configure a first CGO for one or more candidate cells; and a processing module, configured to select, based on one or more beam measurement results, a target cell from the one or more candidate cells for cell switching, in which the target cell corresponds to a second CGO; the second CGO is configured for the terminal to send second information to the target cell; and the second information indicates that the terminal confirms switching to the target cell.

According to a sixth aspect of embodiments of the disclosure, a terminal is provided. The terminal includes: one or more processors, in which the one or more processors are configured to implement the method for determining a resource according to the first aspect.

According to a seventh aspect of embodiments of the disclosure, a network device is provided. The network device includes: one or more processors, in which the one or more processors are configured to implement the method for determining a resource according to the second aspect.

According to an eighth aspect of embodiments of the disclosure, a communication system is provided. The communication system includes: a terminal, configured to implement the method for determining a resource according to the first aspect, and a network device, configured to implement the method for determining a resource according to the second aspect.

According to a ninth aspect of embodiments of the disclosure, a storage medium is provided. The storage medium stores instructions, in which when the instructions are executed on a communication device, the communication device is caused to perform the method for determining a resource according to the first aspect or the second aspect.

Through embodiments of the disclosure, during a cell switching process, sending a confirmation message to the target cell to access the target cell and complete the switching can be implemented.

### BRIEF DESCRIPTION OF THE DRAWINGS

In order to more clearly illustrate technical solutions in embodiments of the disclosure, the figures required for describing the embodiments are introduced below. The following figures are merely some embodiments of the disclosure and do not specifically limit the scope of protection of the disclosure.
FIG. 1 is a schematic diagram illustrating an architecture of a communication system according to an embodiment of the disclosure.
FIG. 2A is an interaction diagram illustrating a method for determining a resource according to an embodiment of the disclosure.
FIG. 2B is a schematic diagram illustrating a configured grant occasion (CGO) time-frequency resource configuration with a repetition number configured in a time domain.
FIG. 2C is a schematic diagram illustrating a CGO time-frequency resource configuration with a repetition number configured in a time domain.
FIG. 2D is a schematic diagram illustrating a CGO time-frequency resource configuration with a repetition number configured in a frequency domain.
FIG. 2E is a schematic diagram of mapping a synchronization signal block (SSB) index to a CGO in an order of a CGO time domain index and a CGO frequency domain index.
FIG. 2F is a schematic diagram of mapping an SSB index to a CGO in an order of a CGO time domain index and a CGO frequency domain index.
FIG. 3A is a flowchart illustrating a method for determining a resource according to an embodiment of the disclosure.
FIG. 3B is a flowchart illustrating a method for determining a resource according to an embodiment of the disclosure.
FIG. 3C is a flowchart illustrating a method for determining a resource according to an embodiment of the disclosure.
FIG. 4A is a flowchart illustrating a method for determining a resource according to an embodiment of the disclosure.
FIG. 4B is a flowchart illustrating a method for determining a resource according to an embodiment of the disclosure.
FIG. 4C is a flowchart illustrating a method for determining a resource according to an embodiment of the disclosure.
FIG. 5 is an interaction diagram illustrating a method for determining a resource according to an embodiment of the disclosure.
FIG. 6A is a block diagram illustrating a terminal according to an embodiment of the disclosure.
FIG. 6B is a block diagram illustrating a network device according to an embodiment of the disclosure.
FIG. 7A is a block diagram illustrating a communication device according to an embodiment of the disclosure.
FIG. 7B is a block diagram illustrating a chip according to an embodiment of the disclosure.

### DETAILED DESCRIPTION

Embodiments of the disclosure provide a method for determining a resource, a terminal, a network device, and a communication system.

In a first aspect, embodiments of the disclosure provide a method for determining a resource. The method includes: receiving, by a terminal, first information sent by a serving cell, in which the first information is used to configure a first configured grant occasion (CGO) for one or more candidate cells; and determining, based on the first information, a second CGO for a target cell, in which the second CGO is configured for the terminal to send second information to the target cell, in which the target cell is a target cell selected by the serving cell from the one or more candidate cells for cell switching based on one or more beam measurement results, and the second information indicates that the terminal confirms switching to the target cell.

In the above embodiments, by configuring the CGO of the one or more candidate cells via the first information, a time-frequency resource for sending an access message to the target cell may be clearly determined, and then the access message is sent to the target cell to access the target cell to complete the switching.

In some embodiments in combination with the first aspect, in some embodiments, embodiments of the disclosure provide a method for determining a resource. The method includes: receiving, by a terminal, first information sent by a serving cell, in which the first information is used to configure a first CGO for one or more candidate cells; and determining, based on the first information, a second CGO for a target cell, in which the second CGO is configured for the terminal to send second information to the target cell, in which the second CGO is configured for the terminal to send second information to the target cell; in which the target cell is a target cell selected by the serving cell from the one or more candidate cells for cell switching based on one or more beam measurement results of one or more candidate cells reported by a user, and the second information indicates that the terminal confirms switching to the target cell.

In some embodiments in combination with the first aspect, in some embodiments, the first information includes at least one of: time-frequency resource configuration information of a CGO of the one or more candidate cells; or a mapping relationship between a CGO of the one or more candidate cells and a synchronization signal block (SSB) index corresponding to a beam.

In some embodiments in combination with the first aspect, in some embodiments, the time-frequency resource configuration information of the CGO includes at least one of: a configuration information set of a CG physical uplink shared channel (PUSCH), in which the configuration information set of the CG PUSCH includes one or more pieces of configuration information, and each piece of configuration information is configured with one CGO; a repetition number of one CGO, in which the repetition number includes at least one of a first repetition number or a second repetition number, the first repetition number indicates a repetition number of the one CGO in a time domain, and the second repetition number indicates a repetition number of the one CGO in a frequency domain; or time-frequency resource block information and a number of CGOs, in which the time-frequency resource block information includes at least one of time domain resource block information or frequency domain resource block information, the number of CGOs includes at least one of a first number or a second number, the time domain resource block information indicates total time domain resources occupied by the first number of CGOs within a first time domain resource range, and the frequency domain resource block information indicates total frequency domain resources occupied by the second number of CGOs within a first frequency domain resource range.

In the above embodiments, a CG PUSCH resource of the target cell may be determined, which is configured for sending a confirmation message to the target cell to access the target cell and complete the switching.

In some embodiments in combination with the first aspect, in some embodiments, in a case that the one CGO is repeated in the time domain by the first repetition number, at least one of the following is satisfied: repeated CGOs are allowed to be located in a same time unit; or repeated CGOs are not allowed to be located in a same time unit.

In the above embodiments, the CG PUSCH resource of the target cell may be determined for sending the confirmation message to the target cell to access the target cell and complete the switching.

In some embodiments in combination with the first aspect, in some embodiments, the first information further includes a first parameter, and the first parameter indicates an interval between the repeated CGOs located in the same time unit.

In the above embodiments, a case where a plurality of CGOs in one time slot is defined, reducing a slot resource occupied by the CGOs as a whole.

In some embodiments in combination with the first aspect, in some embodiments, the first information does not include a first parameter, and the repeated CGOs are not allowed to be located in the same time unit.

In the above embodiments, a case where a plurality of CGOs in one time slot is defined, reducing the slot resource occupied by the CGOs as a whole.

In some embodiments in combination with the first aspect, in some embodiments, the time domain resource block information includes at least one of: a period of the CG PUSCH; a time domain offset; a total number of time units occupied; or a number of CGOs included in each time unit.

In some embodiments in combination with the first aspect, in some embodiments, the frequency domain resource block information includes at least one of: a physical resource block offset of a starting position of a frequency domain resource; the first frequency domain resource range; or a number of CGOs frequency-division multiplexed in the first frequency domain resource.

In some embodiments in combination with the first aspect, in some embodiments, the mapping relationship between the CGO and the beam is determined by at least one of the following manners: a first mapping manner, in which the first mapping manner is to map the SSB index to the CGO in an order of a CGO time domain index and a CGO frequency domain index; a second mapping manner, in which the second mapping manner is to map the SSB index to the CGO in an order of a demodulation reference signal (DMRS) code division multiplexing (CDM) group index, a DMRS port index, a DMRS sequence number, a CGO time domain index and a CGO frequency domain index; or a third mapping manner, in which the third mapping manner is to map the SSB index to the CGO based on a mapping relationship configured by a network, in which the mapping relationship indicates a correspondence between one CGO and one or more SSB indices.

In some embodiments in combination with the first aspect, in some embodiments, the mapping relationship between the CGO and the beam is determined by at least one of: mapping the SSB index to the CGO in an order of the CGO time domain index first and then the CGO frequency domain index; mapping the SSB index to the CGO in an order of the DMRS CDM group index first, and then the DMRS port index, the DMRS sequence number, the CGO time domain index and the CGO frequency domain index; or mapping the SSB index to the CGO based on the mapping relationship configured by the network, in which the mapping relationship indicates the correspondence between one CGO and one or more SSB indices.

In some embodiments in combination with the first aspect, in some embodiments, the correspondence between the one CGO and the one or more SSB indices satisfies at least one of: one CGO corresponding to one SSB index; or one CGO corresponding to a plurality of SSB indices.

In the above embodiments, the mapping relationship between the CGO and the SSB index is defined.

In some embodiments in combination with the first aspect, in some embodiments, in response to the one CGO corresponding to the plurality of SSB indices, the method further includes: sending third information to the target cell, in which the third information indicates a first SSB index, and the first SSB index is one of the plurality of SSB indices corresponding to the one CGO.

In the above embodiments, the mapping relationship between the CGO and the SSB index is defined, so that when the user retransmits the access information by using the CGO resource, the user may reselect an optimal transmission beam for the target cell, and a correct transmission of the access information is ensured as much as possible to complete the switching.

In some embodiments in combination with the first aspect, in some embodiments, the third information is the second information.

In some embodiments in combination with the first aspect, in some embodiments, the third information is included in the second information.

In the above embodiments, the mapping relationship between the CGO and the SSB index is defined.

In some embodiments in combination with the first aspect, in some embodiments, mapping the SSB index to the CGO in the order of the DMRS CDM group index, the DMRS port index, the DMRS sequence number, the CGO time domain index and the CGO frequency domain index includes: mapping the CGO to the SSB index corresponding to the beam in an ascending order of the DMRS CDM group index; after completing the mapping of the DMRS CDM group index, mapping the CGO to the SSB index corresponding to the beam in an ascending order of the DMRS port index; after completing the mapping of the DMRS port index, mapping the CGO to the SSB index corresponding to the beam in an ascending order of the DMRS sequence number; after completing the mapping of the DMRS sequence number, mapping the CGO to the SSB index corresponding to the beam in an ascending order of the CGO frequency domain index; and after completing the mapping of the CGO frequency domain index, mapping the CGO to the SSB index corresponding to the beam in an ascending order of the CGO time domain index.

In some embodiments in combination with the first aspect, in some embodiments, mapping the SSB index to the CGO in the order of the DMRS CDM group index first, and then the DMRS port index, the DMRS sequence number, the CGO time domain index and the CGO frequency domain index in sequence includes: mapping the CGO to the SSB index corresponding to the beam in an ascending order of the DMRS CDM group index; after completing the mapping of the DMRS CDM group index, mapping the CGO to the SSB index corresponding to the beam in an ascending order of the DMRS port index; after completing the mapping of the DMRS port index, mapping the CGO to the SSB index corresponding to the beam in an ascending order of the DMRS sequence number; after completing the mapping of the DMRS sequence number, mapping the CGO to the SSB index corresponding to the beam in an ascending order of the CGO frequency domain index; and after completing the mapping of the CGO frequency domain index, mapping the CGO to the SSB index corresponding to the beam in an ascending order of the CGO time domain index.

In the above embodiments, the mapping relationship between the CGO and the SSB index is defined.

In some embodiments in combination with the first aspect, in some embodiments, the method further includes: in response to an existence of an SSB index not mapped to the CGO after completing one mapping of the SSB index to the CGO based on the first mapping manner or the second mapping manner, mapping, based on a mapping manner (the first mapping manner or the second mapping manner) for the completed mapping, the SSB index not mapped to the CGO to other CGOs in a mapping period in sequence, in which the mapping period includes N CGO periods, the other CGOs are CGOs to which no SSB index is mapped, and the completed mapping refers to the completed one mapping between the SSB index and the CGO.

In the above embodiments, the mapping relationship between the CGO and the SSB index is defined.

In a second aspect, embodiments of the disclosure provide a method for determining a resource. The method includes: sending first information to a terminal, in which the first information is used to configure a first CGO for one or more candidate cells; and selecting, based on one or more beam measurement results, a target cell from the one or more candidate cells for cell switching, in which the target cell corresponds to a second CGO, the second CGO is configured for the terminal to send second information to the target cell, and the second information indicates that the terminal confirms switching to the target cell.

In some embodiments in combination with the second aspect, in some embodiments, the first information includes at least one of: time-frequency resource configuration information of a CGO of the one or more candidate cells; or a mapping relationship between a CGO of the one or more candidate cells and an SSB index corresponding to a beam.

In some embodiments in combination with the second aspect, in some embodiments, the time-frequency resource configuration information of the CGO includes at least one of: a configuration information set of a CG PUSCH, in which the configuration information set of the CG PUSCH includes one or more pieces of configuration information, and each piece of configuration information is configured with one CGO; a repetition number of one CGO, in which the repetition number includes at least one of a first repetition number or a second repetition number, the first repetition number indicates a repetition number of the one CGO in a time domain, and the second repetition number indicates a repetition number of the one CGO in a frequency domain; or time-frequency resource block information and a number of CGOs, in which the time-frequency resource block information includes at least one of time domain resource block information or frequency domain resource block information, the number of CGOs includes at least one of a first number or a second number, the time domain resource block information indicates total time domain resources occupied by the first number of CGOs within a first time domain resource range, and the frequency domain resource block information indicates total frequency domain resources occupied by the second number of CGOs within a first frequency domain resource range.

In some embodiments in combination with the second aspect, in some embodiments, in a case that the one CGO is repeated in the time domain by the first repetition number, at least one of the following is satisfied: repeated CGOs are allowed to be located in a same time unit; or repeated CGOs are not allowed to be located in a same time unit; and in a case that the one CGO is repeated in the frequency domain by the second repetition number, at least one of the following is satisfied: repeated CGOs are allowed to be located in a same frequency domain resource unit; or repeated CGOs are not allowed to be located in a same frequency domain resource unit.

In some embodiments in combination with the second aspect, in some embodiments, the first information further includes a first parameter, and the first parameter indicates an interval between the repeated CGOs located in the same time unit.

In some embodiments in combination with the second aspect, in some embodiments, the first information does not include a first parameter, and the repeated CGOs are not allowed to be located in the same time unit.

In some embodiments in combination with the second aspect, in some embodiments, the time domain resource block information includes at least one of: a period of the CG PUSCH; a time domain offset; a number of time units; or a number of CGOs included in each time unit.

In some embodiments in combination with the second aspect, in some embodiments, the frequency domain resource block information includes at least one of: a physical resource block offset of a starting position of a frequency domain resource; a first frequency domain resource range; or a number of CGOs frequency-division multiplexed in the first frequency domain resource.

In some embodiments in combination with the second aspect, in some embodiments, the mapping relationship between the CGO and the beam is determined by at least one of the following manners: a first mapping manner, in which the first mapping manner is to map the SSB index to the CGO in an order of a CGO time domain index and a CGO frequency domain index; a second mapping manner, in which the second mapping manner is to map the SSB index to the CGO in an order of a DMRS code division multiplexing (CDM) group index, a DMRS port index, a DMRS sequence number, a CGO time domain index and a CGO frequency domain index; or a third mapping manner, in which the third mapping manner is to map the SSB index to the CGO based on a mapping relationship configured by a network, in which the mapping relationship indicates a correspondence between one CGO and one or more SSB indices.

In some embodiments in combination with the second aspect, in some embodiments, the correspondence between the one CGO and the one or more SSB indices satisfies at least one of: one CGO corresponding to one SSB index; or one CGO corresponding to a plurality of SSB indices.

In some embodiments in combination with the second aspect, in some embodiments, in response to the one CGO corresponding to the plurality of SSB indices, the method further includes: receiving third information, in which the third information indicates a first SSB index, and the first SSB index is one of the plurality of SSB indices corresponding to the one CGO.

In some embodiments in combination with the second aspect, in some embodiments, the third information is the second information.

In some embodiments in combination with the second aspect, in some embodiments, mapping the SSB index to the CGO in the order of the DMRS CDM group index, the DMRS port index, the DMRS sequence number, the CGO time domain index and the CGO frequency domain index includes: mapping the CGO to the SSB index corresponding to the beam in an ascending order of the DMRS CDM group index; after completing the mapping of the DMRS CDM group index, mapping the CGO to the SSB index corresponding to the beam in an ascending order of the DMRS port index; after completing the mapping of the DMRS port index, mapping the CGO to the SSB index corresponding to the beam in an ascending order of the DMRS sequence number; after completing the mapping of the DMRS sequence number, mapping the CGO to the SSB index corresponding to the beam in an ascending order of the CGO frequency domain index; and after completing the mapping of the CGO frequency domain index, mapping the CGO to the SSB index corresponding to the beam in an ascending order of the CGO time domain index.

In some embodiments in combination with the second aspect, in some embodiments, the method further includes: in response to an existence of an SSB index not mapped to the CGO after completing one mapping of the SSB index to the CGO; mapping, based on a mapping manner (the first mapping manner or the second mapping manner) for the completed mapping, the SSB index not mapped to the CGO to other CGOs in a mapping period in sequence, in which the mapping period includes N CGO periods, the other CGOs are CGOs to which no SSB index is mapped, and the completed mapping refers to the completed one mapping between the SSB index and the CGO.

In a third aspect, embodiments of the disclosure provide a method for determining a resource. The method includes: receiving, by a terminal, first information sent by a serving cell, in which the first information is used to configure a first CGO for one or more candidate cells; determining, by a terminal, a second CGO for a target cell based on the first information, in which the second CGO is configured for the terminal to send second information to the target cell, in which the target cell is a cell selected by the serving cell from the one or more candidate cells for cell switching based on one or more beam measurement results, and the second information indicates that the terminal confirms switching to the target cell.

In a fourth aspect, embodiments of the disclosure provide a terminal. The terminal includes: a transceiver module, configured to receive first information sent by a serving cell, in which the first information is used to configure a first CGO for one or more candidate cells; and a processing module, configured to determine, based on the first information, a second CGO for a target cell, in which the second CGO is configured for the terminal to send second information to the target cell, in which the target cell is a cell selected by the serving cell from the one or more candidate cells for cell switching based on one or more beam measurement results, and the second information indicates that the terminal confirms switching to the target cell.

In a fifth aspect, embodiments of the disclosure provide a network device. The network device includes: a transceiver module, configured to send first information to a terminal, in which the first information is used to configure a first CGO for one or more candidate cells; and a processing module, configured to select, based on one or more beam measurement results, a target cell from the one or more candidate cells for cell switching, in which the target cell corresponds to a second CGO; the second CGO is configured for the terminal to send second information to the target cell; and the second information indicates that the terminal confirms switching to the target cell.

In a sixth aspect, embodiments of the disclosure provide a terminal. The terminal includes: one or more processors, in which the one or more processors are configured to implement the method for determining a resource according to the first aspect.

In a seventh aspect, embodiments of the disclosure provide a network device. The network device includes: one or more processors, in which the one or more processors are configured to implement the method for determining a resource according to the second aspect.

In an eighth aspect, embodiments of the disclosure provide a communication system. The communication system includes: a terminal, configured to implement the method for determining a resource according to the first aspect, and a network device, configured to implement the method for determining a resource according to the second aspect.

In a ninth aspect, embodiments of the disclosure provide a storage medium. The storage medium stores instructions, in which when the instructions are executed on a communication device, the communication device is caused to perform the method for determining a resource according to the first aspect or the second aspect.

It may be understood that the terminal, the access network device, the first network element, the second network element, the core network device, the communication system, the storage medium, the program product, the computer program, and the chip or the chip system are all used to implement the method in the embodiments of the disclosure. Thus, regarding beneficial effects they may achieve, reference may made be to the beneficial effects in the corresponding methods, which is not repeated herein.

Embodiments of the disclosure provide a method for determining a resource, a device, and a storage medium. In some embodiments, terms such as "method for determining a resource", "method for information processing", and "communication method" may be used interchangeably; terms such as "apparatus for determining a resource", "apparatus for information processing", and "communication apparatus" may be used interchangeably; and terms such as "system for information processing", and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined. In addition, respective embodiments may be arbitrarily combined, for example, some or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments, and in some cases may also be understood as "equipment", "device", "circuit", "network element", "node", "function", "unit", "section", "system", "network", "chip", "chip system", "entity", "subject", and the like.

In some embodiments, the term such as "network" may be interpreted as an apparatus (e.g., an access network device, a core network device, etc.) included in the network.

In some embodiments, the terms such as "access network device (AN device)" may also be referred to as "radio access network device (RAN device)", "base station (BS)", "radio base station", "fixed station", and in some embodiments may also be understood as a "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", and the like.

In some embodiments, the terms such as "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", and the like.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

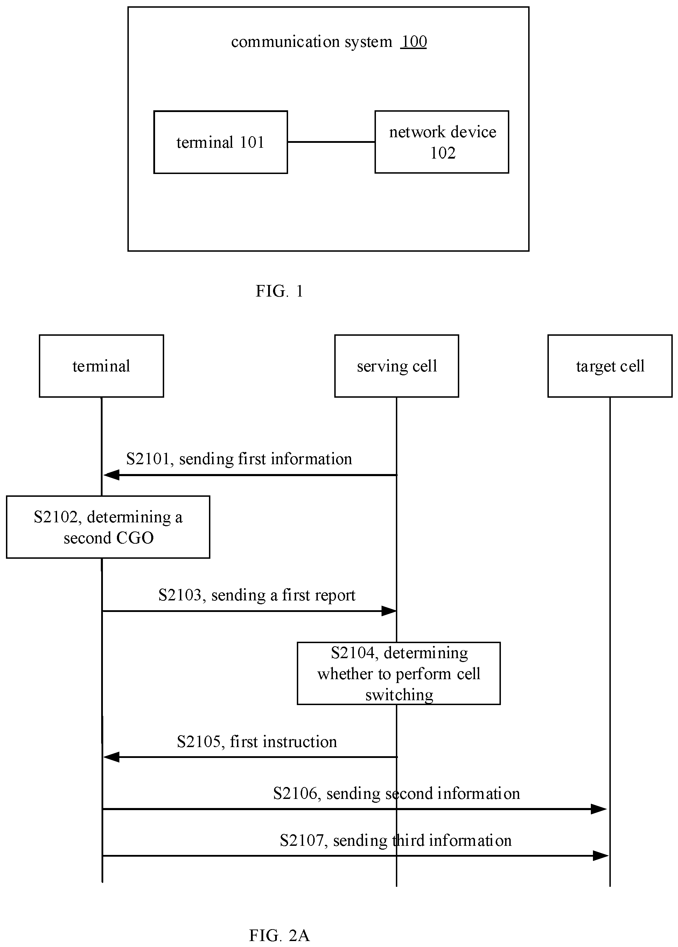

FIG. 1 is a schematic diagram illustrating an architecture of a communication system according to an embodiment of the disclosure. As shown in FIG. 1, the communication system 100 includes a terminal 101 and a network device 102.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the network device includes at least one of: the access network device, or the core network device.

In some embodiments, the access network device may be, for example, a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, interfaces between or within access network devices involved in embodiments of the disclosure may become internal interfaces of the Open RAN, and processes and information interactions between these internal interfaces may be implemented through software or programs.

In some embodiments, the access network device may include a central unit (CU) and distributed units (DUs), in which the CU may also be called a control unit. A protocol layer of the access network device may be divided by adopting the CU-DU structure. Part of functions of the protocol layer are centrally controlled by the CU, and part of or all of remaining functions of the protocol layer are distributed in the DUs which are centrally controlled by the CU, but is not limited herein.

In some embodiments, the core network device may be one device, including one or more network elements, or may be a plurality of devices or device groups, respectively including all or part of the one or more network elements. A network element may be virtual or physical. The core network may include, for example, at least one of an evolved packet core (EPC), a 5G core network (5GCN), or a next generation core (NGC).

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure are also applicable to similar technical problems.

The following embodiments of the disclosure may be applied to the communication system 100 or part of the subjects shown in FIG. 1, but are not limited herein. The subjects shown in FIG. 1 are examples, and the communication system may include all or part of the subjects in FIG. 1, or may include other subjects than those shown in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In embodiments of the disclosure, FIG. 1B is a schematic diagram illustrating a RACH-less cell switch procedure. Referring to FIG. 1B, a terminal pre-configures information, for example, the access network device 102 sends information for configuring resources to the terminal 101, such as the access network device 102 sending a radio resource control (RRC) message to the terminal 101 to configure resources for a candidate cell. For example, a CGO is configured. The terminal 101 reports an L1 measurement report (which may also be referred to as a beam measurement result) to a source cell. A serving cell determines whether to perform cell switching based on the L1 measurement report/based on each beam measurement result. In a case where it is determined to perform cell switching, a target cell for cell switching is selected from candidate cells. The source cell sends a cell switching signaling (cell switch command) to the terminal. After receiving the cell switch command, the terminal does not need to access the target cell via random access channel less (RACH). Instead, the terminal sends information to the target cell, so that the target cell determines that the terminal accesses the target cell, which may also be understood as the terminal confirming access to the target cell. For example, the terminal sends specific "first UL data" to the target cell to allow the target cell to determine user access, such as the terminal sending a radio resource control reconfiguration complete (RRCReconfigurationComplete) message.

In embodiments of the disclosure, information for configuring resources of a candidate cell is referred to as first information.

In embodiments of the disclosure, information used for a target cell to determine user access/for a terminal to confirm access to a target cell is referred to as second information.

In an implementation, the CGO configured by the first information is determined, but in a case that the CGO information changes, how the terminal determines the CGO for sending the second information is a problem to be solved. For example, in some embodiments, when the terminal sends data to a target cell for a network device for the first time, i.e., a confirmation or access message, the initial transmission may fail. In this case, the user may attempt to resend the access message. During retransmission, the user may reselect a transmission beam with the target cell. That is, during retransmission, the user may reselect a beam, and for this purpose, it is necessary to consider configuring a correspondence between different CG PUSCH time-frequency resources (hereinafter also referred to as CGOs) and different beams, so as to perform beam pairing between the user and the network (also referred to as beam pairing between the terminal and the access network device) via the mapping manner. To enable beam configuration between the user and the target cell, configuring a correspondence between different CG PUSCH time-frequency resources (CGOs) and different beams is considered. By sending a confirmation message on different CGOs, the transmission beam selected by the user for the target cell is implicitly indicated to the target cell.

In this case, embodiments of the disclosure provide a design issue for a CG PUSCH for sending the second information for accessing the target cell, including configuration of time-frequency resources and design of a mapping relationship for different beams. The design of the CG PUSCH for sending the second information for accessing the target cell provided in embodiments of the disclosure may also be understood as a method for determining a resource. Embodiments of the disclosure provide a method for determining a resource, for sending second information to a target cell during a cell switching process, to access the target cell and complete cell switching.

FIG. 2A is an interaction diagram illustrating a method for determining a resource according to an embodiment of the disclosure. As shown in FIG. 2A, embodiments of the disclosure relate to a method for determining a resource. The method includes the following steps S2101 to S2107.

At step S2101, a serving cell sends first information to a terminal.

It should be noted that, the serving cell sending the first information to the terminal may be understood as a network device (e.g., an access network device) to which the serving cell belongs sending the first information to the terminal.

It may be understood that, the terminal receiving the first information sent by the serving cell may be understood as the terminal receiving the first information sent by the network device (e.g., an access network device) to which the serving cell belongs.

In some embodiments, the serving cell sending the first information may be understood as an access network device to which the serving cell belongs sending the first information.

In some embodiments, the terminal receives the first information.

In some embodiments, the first information is used to configure resource information. In some embodiments, the first information is used to configure a scheduling-free PUSCH time-frequency resource (CG PUSCH, CGO). The scheduling-free PUSCH time-frequency resource may also be referred to as a CG PUSCH transmission occasion/reception occasion (CG PUSCH occasion, CGO).

In some embodiments, the first information is used to configure resource information of a cell. The cell may be a candidate cell or a source cell.

In some embodiments, the first information is used to configure a CGO of a candidate cell. A number of candidate cells is one or more.

In some embodiments, the first information is used to configure the CGO of each of one or more candidate cells. Optionally, the CGO of the candidate cell is referred to as a first CGO. There is a one-to-one correspondence between the candidate cell and the first CGO.

In some embodiments, a number of the first CGO is one or more. There is a correspondence between the number of the first CGO and a number of the candidate cells. For example, one candidate cell corresponds to one first CGO.

In some embodiments, a name of the first information is not limited, and the name of the first information may be, for example, "pre-configuration information", "configuration information", or the like.

In some embodiments, the first information includes an RRC signaling, or may also be other information for configuring the CGO for the terminal.

In some embodiments, the first information includes at least one of: time-frequency resource configuration information of the CGO, or a mapping relationship between the CGO and a beam.

In some embodiments, the first information is used to configure the time-frequency resource configuration information of the CGO of a cell, and the mapping relationship between the CGO and the beam. The cell may be any one of the one or more candidate cells. It may be understood that the cell may also be a target cell, and the target cell is a target cell selected from the one or more candidate cells for performing switching.

In some embodiments, the first information includes at least one of: the time-frequency resource configuration information of the CGO of the one or more candidate cells, or a mapping relationship between the CGO of the one or more candidate cells, the beam and an SSB index.

In some embodiments, the first information includes the time-frequency resource configuration information of the CGO. The first information including the time-frequency resource configuration information of the CGO may be understood as a manner for configuring the CGO.

In some embodiments, the time-frequency resource configuration information of the CGO includes at least one of the following A, B, or C.
A, a configuration information set of a CG PUSCH.

In some embodiments, the configuration information set of the CG PUSCH includes one or more pieces of configuration information, and each piece of configuration information is configured with one CGO.

In some embodiments, the configuration information of the CG PUSCH may be referred to as a CG PUSCH configuration, or as a resource configuration of the CG PUSCH, or may also be referred to as configuration information.

In some embodiments, the configuration information set of the CG PUSCH may be understood as a CG PUSCH configuration list, including a plurality of CG PUSCH configurations.

In some embodiments, the one or more pieces of configuration information include a time-frequency resource configuration. The time-frequency resource configuration includes a time domain resource configuration. Alternatively, the time-frequency resource configuration includes a frequency domain resource configuration. Alternatively, the time-frequency resource configuration includes a time domain resource configuration and a frequency domain resource configuration.

In some embodiments, there is a correspondence between the one or more pieces of configuration information and a candidate cell. For example, a candidate cell A corresponds to one or more pieces of configuration information A, and a candidate cell B corresponds to one or more pieces of configuration information B.

In some embodiments, the configuration information may be understood as configuration information of the first CGO. In some embodiments, the candidate cell A corresponds to one or more CGO A, and the candidate cell B corresponds to one or more CGO B.

B. One CGO configuration and a repetition number of one CGO.

In some embodiments, the repetition number includes at least one of a first repetition number or a second repetition number. In some embodiments, the first repetition number indicates a repetition number of the one CGO in a time domain. In some embodiments, the second repetition number indicates a repetition number of the one CGO in a frequency domain.

In some embodiments, the time-frequency resource configuration information of the CGO includes the time-frequency resource configuration and the repetition number. In this case, a content of second information, e.g., a content of a first uplink (UL) data transmission, is relatively fixed, and there is no need to separately allocate the time-frequency resource for each possible CGO. Thus, different CGOs have a same time-frequency resource block size, which may satisfy the first UL data transmission. Thus, a time domain repetition number and/or a frequency domain repetition number may be introduced into the time-frequency resource configuration information of the CGO, and the repetition number indicates a number of times that a time-frequency resource block of the CG PUSCH is repeated in the time domain and/or the frequency domain.

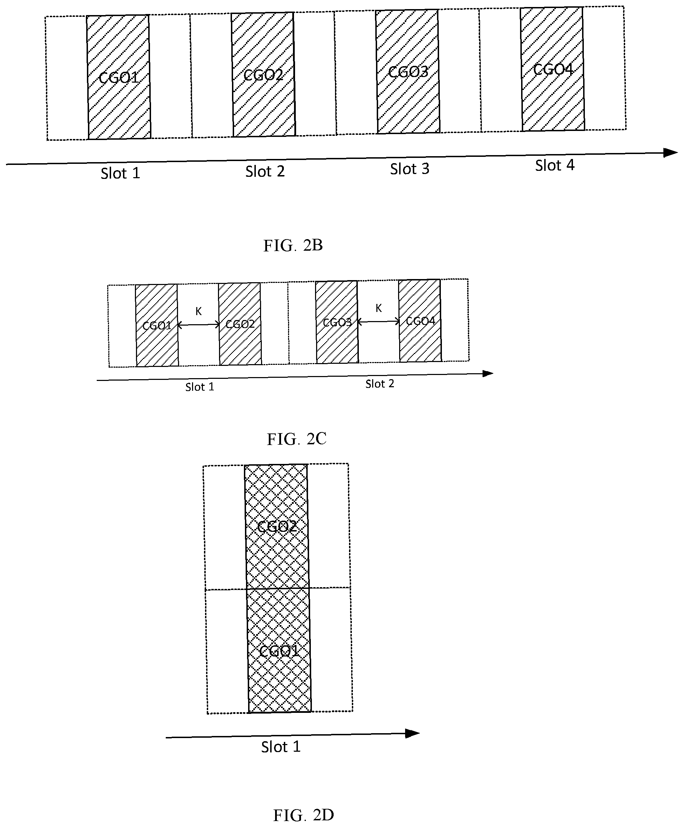

In some embodiments, the time-frequency resource configuration information of the CGO includes a repetition number of one CGO in the time domain. The repetition number of one CGO in the time domain may be understood as a repetition number of CGO(s) having the same time-frequency resource block size in the time domain. FIG. 2B is a schematic diagram illustrating a CGO time-frequency resource configuration with a repetition number configured in the time domain. As shown in FIG. 2B, the repetition number configured in the time domain is 4, and CGO1 configured at slot 1, CGO2 configured at slot 2, CGO3 configured at slot 3, and CGO4 configured at slot 4 have the same time-frequency resource block size.

In some embodiments, in a case that the one CGO is repeated in the time domain by the first repetition number, at least one of the following is satisfied: repeated CGOs are allowed to be located in a same time unit; or repeated CGOs are not allowed to be located in a same time unit.

In some embodiments, the time unit may be at least one of a slot, a subslot, a frame, a symbol, or the like.

In some embodiments, the repeated CGOs are not allowed to be located in the same time unit. For example, the time unit includes the slot. The repetition number configured in the time-frequency resource configuration information of the CGO is for repetition in different slots (inter-slot repetition), e.g., repetition only considers the inter-slot repetition as shown in FIG. 2B.

In some embodiments, the repeated CGOs are allowed to be located in a same time unit. In some embodiments, in a case that the one CGO is repeated in the time domain by the first repetition number, the repetition may be performed in the same time unit or in different time units. For example, the time unit is the slot. In a case that the one CGO is repeated in the time domain by the first repetition number, both intra-slot repetition and inter-slot repetition are considered.

In some embodiments, the repeated CGOs are allowed to be located in a same time unit. In a case that the one CGO is repeated in the time domain by the first repetition number and repeated in the same time unit, a parameter indicating whether repetition in the same time unit is allowed may be introduced. In some embodiments, introducing an interval parameter for the intra-slot repetition, hereinafter referred to as a first parameter, is considered. The first parameter K is used to determine whether the repetition in the same time unit is allowed and an interval between different CGOs during the repetition. In an example, if the first parameter K is not configured, i.e., the parameter K is absent, it is considered that a configuration of repetition in the same time unit is not allowed, e.g., the intra-slot repetition is not allowed. On the other hand, if the first parameter K is configured, it indicates that the configuration of repetition in the same time unit is allowed, and the interval between CGOs in the same time unit is K.

In some embodiments, a value of the first parameter K is a time interval of the repetition. A unit of K is smaller than a unit of the time unit. For example, the time unit is the slot, and the unit of K may be the symbol. For example, K=0, 1, ..., N symbol(s), or other indication parameters. FIG. 2C is a schematic diagram illustrating a CGO time-frequency resource configuration with a repetition number configured in the time domain. As shown in FIG. 2C, the repetition number configured in the time domain is 4, and K=2. The CGO1 and the CGO2 are allowed to be configured in the same time unit of slot1. The interval between the CGO1 and the CGO2 is K=2 symbols. The CGO3 and the CGO4 are allowed to be configured in the same time unit of slot2. The interval between the CGO3 and the CGO4 is K=2 symbols. The CGO1, the CGO2, the CGO3, and the CGO4 have the same time-frequency resource block size.

In some embodiments, the first parameter K may be carried in the first information. For example, the first parameter K is carried in an RRC signaling.

In some embodiments, the first information includes a first parameter, and the first parameter indicates an interval between the repeated CGOs located in the same time unit.

In some embodiments, the first information does not include the first parameter, and the repeated CGOs are not allowed to be located in the same time unit, i.e., the configuration of the repetition in the same time unit is not allowed.

In some embodiments, the time-frequency resource configuration information of the CGO includes a configuration parameter of one CGO and the repetition number of the one CGO in the frequency domain. The repetition number of one CGO in the frequency domain may be understood as the repetition number of CGO(s) having a same time-frequency resource configuration, that is, the repetition number of CGO(s) having the same time-frequency resource block size in the frequency domain. FIG. 2D is a schematic diagram illustrating a CGO time-frequency resource configuration with a repetition number configured in the frequency domain. As shown in FIG. 2D, the repetition number configured in the frequency domain is 2, and the CGO1 and the CGO2 are configured on different frequency domains of slot1. The CGO1 and the CGO2 have the same time-frequency resource block size.

In some embodiments, the time-frequency resource configuration information of the CGO includes the configuration parameter of one CGO, the repetition number of the one CGO in the frequency domain and the repetition number of the one CGO in the time domain.

C. Time-frequency resource block information and CGO number information.

In some embodiments, the time-frequency resource having a certain size is configured, and a number of CGOs is configured, so as to allocate the time-frequency resource of each CGO based on the number of CGOs in the configured time-frequency resource.

In some embodiments, the time-frequency resource block information includes at least one of time domain resource block information or frequency domain resource block information. In some embodiments, the time domain resource block information indicates total time domain resources occupied by one or more first CGOs within a first time domain resource range. In some embodiments, the frequency domain resource block information indicates total frequency domain resources occupied by the first CGO within a first frequency domain resource range.

In some embodiments, the number of CGOs includes at least one of a first number or a second number.

In some embodiments, the time-frequency resource block information includes the time domain resource block information, and the number of CGOs includes the first number. The time domain resource block information indicates total time domain resources occupied by the first number of CGOs within the first time domain resource range, e.g., a number of time units occupied, such as a number of slots.

In some embodiments, the time domain resource block information includes at least one of: a period of the CG PUSCH, a time domain offset, a total number of time units, and a number of CGOs included in each time unit. In some embodiments, the time-frequency resource configuration information of the CGO includes time domain resource configuration information: the period of the CG PUSCH and the offset are configured to determine an absolute time domain position of a resource. The number of time units, e.g., a number of slots, and the number of CGOs included in each time unit (number of CGO per slot) are configured to determine a number of slots occupied by a time domain resource and a number of CGOs in each slot. The absolute time domain position of the resource determined by the period of the CG PUSCH and the offset may be understood as a starting position. Starting from the starting position, CGOs are allocated within a specified resource block (the first time domain resource range) based on the number of slots and the number of CGO per slot.

In some embodiments, the number of CGOs included in each time unit may be an integer N, or may be a fraction, e.g., 1/2, indicating that one CGO occupies two slots.

In some embodiments, the time-frequency resource block information includes the frequency domain resource block information, and the number of CGOs includes the second number. The frequency domain resource block information indicates total frequency domain resources occupied by the second number of CGOs within the first frequency domain resource range.

In some embodiments, the frequency domain resource block information includes at least one of: a physical resource block (PRB) offset of a starting position of a frequency domain resource, the first frequency domain resource range, or a number of CGOs frequency-division multiplexed in the first frequency domain resource.

In some embodiments, the first frequency domain resource range may be a default value, e.g., an entire bandwidth part (BWP).

In some embodiments, the frequency domain resource block information includes at least one of: a PRB offset of a frequency domain resource; an allocated frequency domain resource (which may default to an entire BWP); or a number of CGOs frequency-division multiplexed in the frequency domain resource. Optionally, the PRB offset is added to the starting position, and CGOs are allocated within the entire BWP based on the number of N frequency-division multiplexed CGOs.

In some embodiments, the first information includes a mapping relationship between a beam and a CGO of the one or more candidate cells.

In some embodiments, there is a correspondence between a beam and an SSB index. Configuring the mapping relationship between the CGO and the beam may be configuring a mapping relationship between the CGO and the SSB index. Optionally, the SSB is also referred to as a synchronization signal/physical broadcast channel signal block.

In some embodiments, the mapping relationship between the CGO and the beam is determined by at least one of the following manners A, B, or C.

First mapping manner: mapping the SSB index to the CGO in an order of a CGO time domain index and a CGO frequency domain index.

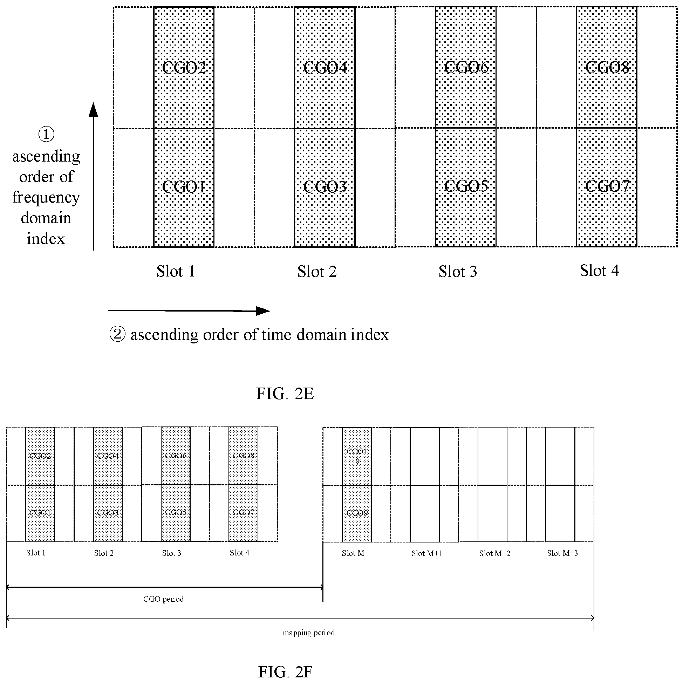

In some embodiments, the mapping is performed first according to the CGO frequency domain index and then the CGO time domain index. For example, the CGO is mapping to the SSB index corresponding to the beam in an ascending order of the frequency domain index in a first time domain. After completing the mapping of the frequency domain index in the first time domain, the CGO is mapping to the SSB index corresponding to the beam in the ascending order of the frequency domain index in a second time domain. FIG. 2E is a schematic diagram of mapping an SSB index to a CGO in an order of a CGO time domain index and a CGO frequency domain index. Referring to FIG. 2E, the mapping between CGO1 and CGO2 and one or more SSB indices is completed on slot1 in the ascending order of the frequency domain index. Then, in the ascending order of the time domain index, the mapping between CGO3 and CGO4 and one or more SSB indices is completed on slot2 in the ascending order of the frequency domain index. Based on the above manner, the mapping between CGO5 and CGO6 and one or more SSB indices is sequentially completed on slot3 in the ascending order of the frequency domain index, and the mapping between CGO7 and CGO8 and one or more SSB indices is completed on slot4 in the ascending order of the frequency domain index.

In some embodiments, the mapping is performed first according to the CGO time domain index and then the CGO frequency domain index. For example, the CGO is mapping to the SSB index corresponding to the beam in the ascending order of the time domain index in the first frequency domain. After completing the mapping of the time domain index in the first frequency domain, the CGO is mapping to the SSB index corresponding to the beam in the ascending order of the time domain index in the second frequency domain.

In some embodiments, when the SSB index is mapped to the CGO, one CGO corresponds to one SSB index.

In some embodiments, when the SSB index is mapped to the CGO, one CGO corresponds to a plurality of SSB indices. In this case, the network may be informed via third information which SSB index is specifically selected from the plurality of SSB indices corresponding to the one CGO.

In some embodiments, one SSB index is mapped to the CGO in the order of the CGO time domain index and the CGO frequency domain index, so as to complete one mapping of the SSB index to the CGO. In response to an existence of an SSB index not mapped to the CGO after completing the one mapping of the SSB index to the CGO, the SSB index not mapped to the CGO is sequentially mapped to other CGOs in a mapping period according to the first mapping manner. The mapping period includes N CGO periods, the other CGOs are CGOs to which no SSB index is mapped, and the completed mapping is the completed one mapping between the SSB index and the CGO. FIG. 2F is a schematic diagram of mapping an SSB index to a CGO in an order of a CGO time domain index and a CGO frequency domain index. As shown in FIG. 2F, after completing one mapping of the SSB index to the CGO, e.g., after mapping in the mapping manner shown in FIG. 2E, CGO8 and CGO9 to which no SSB index is mapped, such as the CGO at slot M+1, are not be used for transmission of an access message. The SSB index is then continuously mapped to the CGO8 and the CGO9 within the mapping period.

Second mapping manner: mapping the SSB index to the CGO in an order of a DMRS CDM group index, a DMRS port index, a DMRS sequence number, a CGO time domain index and a CGO frequency domain index.

In some embodiments, an ascending order of a CDM group is prioritized, followed by an ascending order of a DMRS port, and finally an ascending order of a DMRS sequence.

In some embodiments, the SSB index is mapped to the CGO in the order of the DMRS CDM group index, the DMRS port index, the DMRS sequence number, the CGO time domain index and the CGO frequency domain index in the following manner:
1. mapping the CGO to the SSB index corresponding to the beam in an ascending order of the DMRS CDM group index;
2. after completing the mapping of the DMRS CDM group index, mapping the CGO to the SSB index corresponding to the beam in an ascending order of the DMRS port index;
3. after completing the mapping of the DMRS port index, mapping the CGO to the SSB index corresponding to the beam in an ascending order of the DMRS sequence number;
4. after completing the mapping of the DMRS sequence number, mapping the CGO to the SSB index corresponding to the beam in an ascending order of the CGO frequency domain index; and
5. after completing the mapping of the CGO frequency domain index, mapping the CGO to the SSB index corresponding to the beam in an ascending order of the CGO time domain index.

In some embodiments, when the SSB index is mapped to the CGO, one CGO corresponds to one SSB index.

In some embodiments, there are a plurality of SSB indices mapped to the CGO, and one CGO corresponds to a plurality of SSB indices.

In some embodiments, the SSB index is mapped to the CGO in the order of the DMRS CDM group index, the DMRS port index, the DMRS sequence number, the CGO time domain index and the CGO frequency domain index, so as to complete one mapping of the SSB index to the CGO. In response to the existence of an SSB index not mapped to CGOs after one mapping between the SSB index and the CGO is completed according to the second mapping manner, the SSB index not mapped to the CGO is sequentially mapped to other CGOs in a mapping period according to the second mapping manner. The mapping period includes N CGO periods, the other CGOs are CGOs to which no SSB index is mapped, and the completed mapping is the completed one mapping between the SSB index and the CGO. For example, as shown in FIG. 2F, after completing one mapping of the SSB index to the CGO according to the second mapping manner, CGO8 and CGO9 to which no SSB index is mapped, such as the CGO at slot M+1, will not be used for the transmission of the access message. The SSB index is then continuously mapped to CGO8 and CGO9 within the mapping period.

Third mapping manner: mapping the SSB index to the CGO based on a mapping relationship configured by a network.

In some embodiments, the mapping relationship indicates a correspondence between one CGO and one or more SSB indices.

In some embodiments, the time-frequency resource configuration information of the first CGO includes a configuration information set of a CG PUSCH. The configuration information set of the CG PUSCH includes one or more pieces of configuration information, and each piece of configuration information configures one CGO and an SSB index corresponding to the one CGO.

In manner 1, in a case that one SSB index corresponds to a plurality of CGOs is supported, only one SSB index may be configured in each configuration.

In manner 2, in a case that one or more SSB indices correspond to a plurality of CGOs is supported, one or more SSB indices may be configured in each configuration. In this case, to further distinguish the plurality of SSB indices corresponding to one CGO, DMRS resources for distinguishing each SSB index, such as a CDM group, a DMRS port, or a DMRS sequence, may be configured.

For example, for manner 2, in a case that one or more SSB indices correspond to a plurality of CGOs, in addition to configuring the SSB index corresponding to the CGO, other resources corresponding to the SSB index also need to be further configured in the time-frequency resource configuration information of the CGO. The other resources may be, for example, the DMRS CDM group index, the DMRS port index, etc., which are used for further distinguishing a specific SSB index.

At step S2102, the terminal determines a second CGO.

In some embodiments, the terminal determines the second CGO based on the first information.

In some embodiments, the terminal determines, based on the first information, the second CGO for a target cell.

In some embodiments, the second CGO is configured for the terminal to send second information to the target cell.

In some embodiments, the target cell is a cell selected by the serving cell from the one or more candidate cells for cell switching based on one or more beam measurement results.

At step S2103, the terminal sends a first report.

In some embodiments, the terminal sends the first report to the serving cell.

It should be noted that, the terminal sending the first report to the serving cell may be understood as the network device to which the serving cell belongs (e.g., an access network device) sending the first report to the terminal.

It may be understood that, the serving cell receiving the first report sent by the terminal may be understood as the network device to which the serving cell belongs (e.g., the access network device) receiving the first report sent by the terminal.

In some embodiments, the serving cell receives the first report.

In some embodiments, the serving cell receives the first report sent from the terminal.

In some embodiments, the first report indicates a beam measurement report of the one or more candidate cells.

In some embodiments, the first report is a layer 1 (L1) measurement report.

In some embodiments, the first report is a beam measurement report.

At step S2104, the serving cell determines whether to perform cell switching.

In some embodiments, the serving cell determines whether to perform cell switching currently based on the first report.

In some embodiments, content of the first report satisfies a switching condition, and the serving cell performs the cell switching based on the first report.

In some embodiments, the content of the first report does not satisfy the switching condition, and the serving cell does not perform the cell switching based on the first report.

At step S2105, the serving cell sends a first instruction.

In some embodiments, the serving cell sends the first instruction to the terminal.

In some embodiments, the terminal receives the first instruction sent by the serving cell.

It should be noted that the terminal receiving the first instruction sent by the serving cell to the terminal may be understood as the network device to which the serving cell belongs (e.g., the access network device) sending the first instruction to the terminal.

It may be understood that the serving cell sending the first instruction to the terminal may be understood as the network device to which the serving cell belongs (e.g., the access network device) sending the first instruction to the terminal.

In some embodiments, the first instruction is used to instruct the terminal to perform the cell switching.

In some embodiments, the first instruction is a switching instruction.

In some embodiments, the serving cell sends the first instruction based on the first report.

In some embodiments, the serving cell sends the first instruction based on the content of the first report satisfying the switching condition.

At step S2106, the terminal sends second information.

In some embodiments, the terminal sends the second information to the target cell.

In some embodiments, the target cell receives the second information sent by the terminal.

It should be noted that the target cell receiving the second information sent by the terminal to the target cell may be understood as the network device to which the target cell belongs (e.g., the access network device) receiving the second information sent by the terminal.

It may be understood that, the terminal sending the second information to the target cell may be understood as the network device to which the serving cell belongs (e.g., the access network device) sending second information to the terminal.

In some embodiments, the second information indicates that the terminal confirms switching to the target cell.

In some embodiments, the second information is confirmation information.

In some embodiments, the second information is sent to the target cell in a case that the terminal receives the first instruction.

In some embodiments, the second information is sent to the target cell in a case that the serving cell instructs the terminal to perform the cell switching.

At step S2107, the terminal sends third information.

In some embodiments, the terminal sends the third information to the target cell.

In some embodiments, the target cell receives the third information sent by the terminal.

It should be noted that the target cell receiving the third information sent by the terminal to the target cell may be understood as the network device to which the target cell belongs (e.g., the access network device) receiving the third information sent by the terminal.

It may be understood that the terminal sending the third information to the target cell may be understood as the network device to which the target cell belongs (e.g., the access network device) sending the third information to the terminal.

In some embodiments, the third information indicates a first SSB index.

In some embodiments, the first SSB index is one of a plurality of SSB indices corresponding to one CGO.

In some embodiments, the third information is the second information.

For example, the second information indicates the following content: indicating that the terminal confirms switching to the target cell, and indicating the first SSB index.

For example, the third information indicates the following content: indicating that the terminal confirms switching to the target cell, and indicating the first SSB index.

In some embodiments, the names of information or the like are not limited to the names recorded in the embodiments. The terms such as "information", "message", "signal", "signaling", "report", "configuration", "indication", "instruction" "command", "channel", "parameter", "domain", "field", "symbol", "codeword", "codebook", "codepoint", "bit", "data", "program", and "chip" may be used interchangeably.

In some embodiments, the terms such as "resource block (RB)", "physical resource block (PRB)", "sub-carrier group (SCG)", "resource element group (REG)", "PRB pair", "RB pair", "resource element (RE)", and "sub-carrier" may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "bi-directionally transmit", "send and/or receive" or the like may be used interchangeably.

In some embodiments, the terms such as "certain", "predetermined", "preset", "set", "indicated", "a", "any", "first", or the like may be used interchangeable. "Certain A", "predetermined A", "preset A", "set A", "indicated A", "an A", "any A", "first A" may be interpreted as A predefined in a protocol, or as A obtained via setting, configuration, or indication, or as certain A, a A, any A, or first A, etc., but is not limited herein.

In some embodiments, determination or judgment may be performed by a value represented by 1 bit (0 or 1), or by a true/false value (Boolean value) represented by true or false, or by comparison of numerical values (for example, comparison with a predetermined value), but is not limited herein.

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

The communication method in the embodiments of the disclosure may include at least one of step S2101 to step S2107. For example, the step S2101 may be implemented as an independent embodiment, the step S2101 may be implemented as an independent embodiment, the step S2101 and the step S2103 may be implemented as an independent embodiment, the step S2101, the step S2102 and the step S2106 may be implemented as an independent embodiment, the step S2101, the step S2102 and the step S2107 may be implemented as an independent embodiment, and the step S2101, the step S2102, the step S2103, the step S2104, the step S2105, the step S2106 and the step S2107 may be implemented as an independent embodiment, which is not limited herein.

In some embodiments, the step S2101 and the step S2102 may be exchanged in order or performed simultaneously, the step S2103 and the step S2104 may be exchanged in order or performed simultaneously, the step S2106 and the step S2107 may be exchanged in order or performed simultaneously, and the step S2102, the step S2105, and the step S2106 may be exchanged in order or performed simultaneously. For example, the step S2102 may be performed after the step S2105 and before the step S2106.

In some embodiments, the step S2102, the step S2103, the step S2104, the step S2105, the step S2106, and the step S2107 are optional, and one or more of the steps may be omitted or substituted in different embodiments.

In some embodiments, the step S2101, the step S2103, the step S2104, the step S2105, the step S2106, and the step S2107 are optional, and one or more of the steps may be omitted or substituted in different embodiments.

In some embodiments, the step S2101, the step S2102, the step S2104, the step S2105, the step S2106, and the step S2107 are optional, and one or more of the steps may be omitted or substituted in different embodiments.

In some embodiments, the step S2101, the step S2102, the step S2103, the step S2105, the step S2106, and the step S2107 are optional, and one or more of the steps may be omitted or substituted in different embodiments.

In some embodiments, the step S2101, the step S2102, the step S2103, the step S2104, the step S2106, and the step S2107 are optional, and one or more of the steps may be omitted or substituted in different embodiments.

In some embodiments, the step S2101, the step S2102, the step S2103, the step S2104, the step S2105, and the step S2107 are optional, and one or more of the steps may be omitted or substituted in different embodiments.

In some embodiments, the step S2101, the step S2102, the step S2103, the step S2104, the step S2105, and the step S2106 are optional, and one or more of the steps may be omitted or substituted in different embodiments.

In some embodiments, reference to other optional implementations described before or after the description corresponding to FIG. 2A to FIG. 2E may be made.

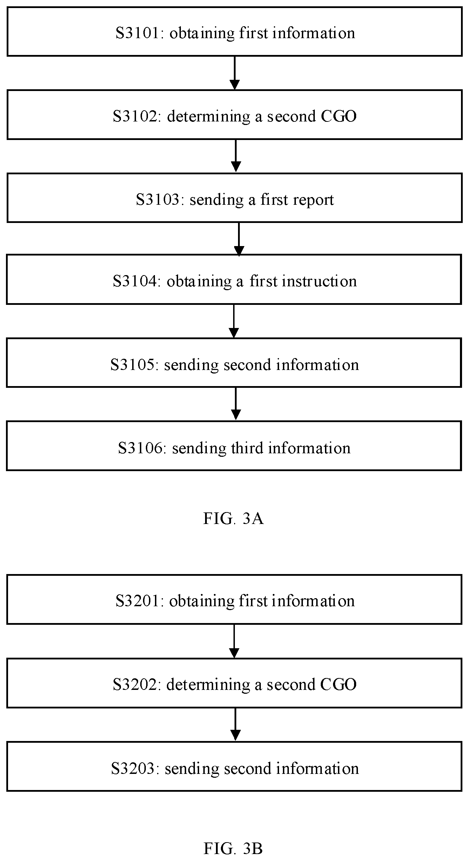

In some embodiments, FIG. 3A is a flowchart illustrating a method for determining a resource according to an embodiment of the disclosure. As shown in FIG. 3A, embodiments of the disclosure relate to a method for determining a resource. The method includes the following steps S3101 to S3106.

At step S3101, first information is obtained.

For optional implementations of step S3101, reference may be made to optional implementations of step S2101 in FIG. 2A and other related parts in the embodiments involved in FIG. 2A, FIG. 2B, FIG. 2C, FIG. 2D, and FIG. 2E, which is not repeated herein.

At step S3102, a second CGO is determined.

For optional implementations of step S3102, reference may be made to optional implementations of step S2102 in FIG. 2A and other related parts in the embodiments involved in FIG. 2A, FIG. 2B, FIG. 2C, FIG. 2D, and FIG. 2E, which is not repeated herein.

At step S3103, a first report is sent.

For optional implementations of step S3103, reference may be made to optional implementations of step S2103 in FIG. 2A and other related parts in the embodiments involved in FIG. 2A, FIG. 2B, FIG. 2C, FIG. 2D, and FIG. 2E, which is not repeated herein.

At step S3104, a first instruction is obtained.

For optional implementations of step S3104, reference may be made to optional implementations of step S2105 in FIG. 2A and other related parts in the embodiments involved in FIG. 2A, FIG. 2B, FIG. 2C, FIG. 2D, and FIG. 2E, which is not repeated herein.

At step S3105, second information is sent.

For optional implementations of step S3105, reference may be made to optional implementations of step S2106 in FIG. 2A and other related parts in the embodiments involved in FIG. 2A, FIG. 2B, FIG. 2C, FIG. 2D, and FIG. 2E, which is not repeated herein.

At step S3106, third information is sent.

For optional implementations of step S3106, reference may be made to optional implementations of step S2107 in FIG. 2A and other related parts in the embodiments involved in FIG. 2A, FIG. 2B, FIG. 2C, FIG. 2D, and FIG. 2E, which is not repeated herein.

The method for determining a resource involved in the embodiments of the disclosure may include at least one of step S3101 to step S3106. For example, the step S3101 may be implemented as an independent embodiment, the step S3102 may be implemented as an independent embodiment, the step S3103 may be implemented as an independent embodiment, the step S3101 and the step S3102 may be implemented as an independent embodiment, the step S3101 and the step S3103 may be implemented as an independent embodiment, the step S3101, the step S3102 and the step S3105 may be implemented as an independent embodiment, the step S3101, the step S3102 and the step S3106 may be implemented as an independent embodiment, the step S3101, the step S3102, the step S3103, the step S3104, the step S3105 and the step S3106 may be implemented as an independent embodiment, but is not limited herein.

In some embodiments, the step S3101 and the step S3102 may be exchanged in order or performed simultaneously, the step S3103 and the step S3104 may be exchanged in order or performed simultaneously, and the step S3106 and the step S3105 may be exchanged in order or performed simultaneously.

In some embodiments, the step S3102, the step S3103, the step S3104, the step S3105, and the step S3106 are optional, and one or more of the steps may be omitted or substituted in different embodiments.

In some embodiments, the step S3101, the step S3103, the step S3104, the step S3105, and the step S3106 are optional, and one or more of the steps may be omitted or substituted in different embodiments.

In some embodiments, the step S3101, the step S3102, the step S3104, the step S3105, and the step S3106 are optional, and one or more of the steps may be omitted or substituted in different embodiments.

In some embodiments, the step S3101, the step S3102, the step S3103, the step S3105, and the step S3106 are optional, and one or more of the steps may be omitted or substituted in different embodiments.

In some embodiments, the step S3101, the step S3102, the step S3103, the step S3104, and the step S3106 are optional, and one or more of the steps may be omitted or substituted in different embodiments.

In some embodiments, the step S3101, the step S3102, the step S3103, the step S3104, and the step S3105 are optional, and one or more of the steps may be omitted or substituted in different embodiments.

FIG. 3B is a flowchart illustrating a method for determining a resource according to an embodiment of the disclosure. As shown in FIG. 3B, embodiments of the disclosure relate to a method for determining a resource. The method includes the following steps S3201 to S3203.

At step S3201, first information is obtained.

For optional implementations of step S3201, reference may be made to step S2101 in FIG. 2A, optional implementations of step S3101 in FIG. 3A, and other related parts in the embodiments involved in FIG. 2A, FIG. 2B, FIG. 2C, FIG. 2D, FIG. 2E, and FIG. 3A, which is not repeated herein.

At step S3202, a second CGO is determined.

For optional implementations of step S3202, reference may be made to step S2102 in FIG. 2A, optional implementations of step S3102 in FIG. 3A, and other related parts in the embodiments involved in FIG. 2A, FIG. 2B, FIG. 2C, FIG. 2D, FIG. 2E, and FIG. 3A, which is not repeated herein.

At step S3203, second information is sent.

For optional implementations of step S3203, reference may be made to step S2102 in FIG. 2A, optional implementations of steps S3103 to S3106 in FIG. 3A, and other related parts in the embodiments involved in FIG. 2A, FIG. 2B, FIG. 2C, FIG. 2D, FIG. 2E, and FIG. 3A, which is not repeated herein.

The communication method involved in the embodiments of the disclosure may include at least one of step S3201 to step S3203. For example, the step S3201 may be implemented as an independent embodiment, and the step S3202 may be implemented as an independent embodiment, but is not limited herein.

In some embodiments, the step S3201 and the step S3202 are optional, and one or more of the steps may be omitted or substituted in different embodiments.

In some embodiments, the step S3201 and the step S3203 are optional, and one or more of the steps may be omitted or substituted in different embodiments.

In some embodiments, the step S3202 and the step S3203 are optional, and one or more of the steps may be omitted or substituted in different embodiments.

In an embodiment of the disclosure, the step S3201 may be combined with steps S3102 to S3103 in FIG. 3A, and the step S3202 may be combined with the step S3101, the step S3102, and the step S3103 in FIG. 3A.

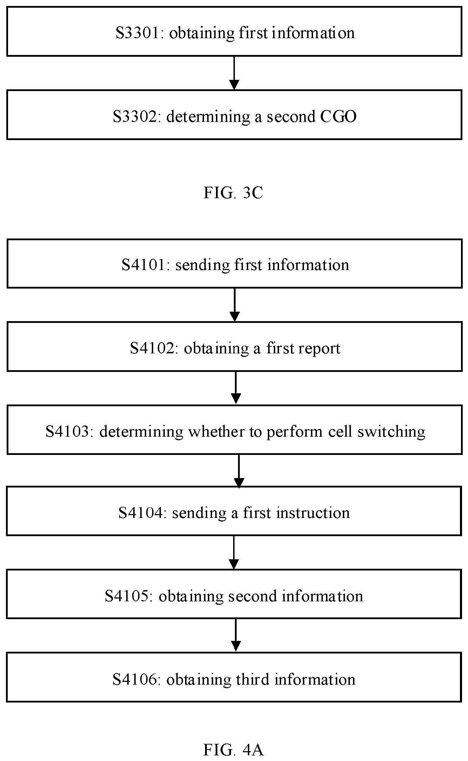

FIG. 3C is a flowchart illustrating a method for determining a resource according to an embodiment of the disclosure. As shown in FIG. 3C, embodiments of the disclosure relate to a method for determining a resource. The method includes the following steps S3301 to S3302.

At step S3301, first information is obtained.

For optional implementations of step S3301, reference may be made to step S2101 in FIG. 2A, optional implementations of step S3101 in FIG. 3A, step S3201 in FIG. 3B, and other related parts in the embodiments involved in FIG. 2A, FIG. 2B, FIG. 2C, FIG. 2D, FIG. 2E, FIG. 3A, and FIG. 3B, which is not repeated herein.

At step S3302, a second CGO is determined.

For optional implementations of step S3302, reference may be made to step S2102 in FIG. 2A, optional implementations of step S3102 in FIG. 3A, step S3202 in FIG. 3B, and other related parts in the embodiments involved in FIG. 2A, FIG. 2B, FIG. 2C, FIG. 2D, FIG. 2E, FIG. 3A, and FIG. 3B, which is not repeated herein.

In some embodiments, the method includes: receiving, by a terminal, first information sent by a serving cell, in which the first information is used to configure a first CGO for one or more candidate cells; and determining, based on the first information, a second CGO for a target cell, in which the second CGO is configured for the terminal to send second information to the target cell, in which the target cell is a cell selected by the serving cell from the one or more candidate cells for cell switching based on one or more beam measurement results, and the second information indicates that the terminal confirms switching to the target cell.

In some embodiments, the first information includes at least one of: time-frequency resource configuration information of a CGO of the one or more candidate cells; or a mapping relationship between the CGO of the one or more candidate cells and an SSB index corresponding to a beam.

In some embodiments, the time-frequency resource configuration information of the CGO includes at least one of: a configuration information set of a CG PUSCH, in which the configuration information set of the CG PUSCH includes one or more pieces of configuration information, and each piece of configuration information is configured with one CGO; a repetition number of one CGO, in which the repetition number includes at least one of a first repetition number or a second repetition number, the first repetition number indicates a repetition number of the one CGO in a time domain, and the second repetition number indicates a repetition number of the one CGO in a frequency domain; or time-frequency resource block information and a number of CGOs, in which the time-frequency resource block information includes at least one of time domain resource block information or frequency domain resource block information, the number of CGOs includes at least one of a first number or a second number, the time domain resource block information indicates total time domain resources occupied by the first number of CGOs within a first time domain resource range, and the frequency domain resource block information indicates total frequency domain resources occupied by the second number of CGOs within a first frequency domain resource range.

In some embodiments, in a case that the one CGO is repeated in the time domain by the first repetition number, at least one of the following is satisfied: repeated CGOs are allowed to be located in a same time unit; or repeated CGOs are not allowed to be located in a same time unit.

In some embodiments, the first information further includes a first parameter, and the first parameter indicates an interval between the repeated CGOs located in the same time unit.

In some embodiments, the first information does not include a first parameter, and the repeated CGOs are not allowed to be located in the same time unit.

In some embodiments, the time domain resource block information includes at least one of: a period of the CG PUSCH; a time domain offset; a total number of time units occupied; or a number of CGOs included in each time unit.

In some embodiments, the frequency domain resource block information includes at least one of: a physical resource block offset of a starting position of a frequency domain resource; a first frequency domain resource range; or a number of CGOs frequency-division multiplexed in the first frequency domain resource.

In some embodiments, the mapping relationship between the CGO and the beam is determined by at least one of the following manners: a first mapping manner, in which the first mapping manner is to map the SSB index to the CGO in an order of a CGO time domain index and a CGO frequency domain index; a second mapping manner, in which the second mapping manner is to map the SSB index to the CGO in an order of a DMRS CDM group index, a DMRS port index, a DMRS sequence number, a CGO time domain index and a CGO frequency domain index; or a third mapping manner, in which the third mapping manner is to map the SSB index to the CGO based on a mapping relationship configured by a network, in which the mapping relationship indicates a correspondence between one CGO and one or more SSB indices.

In some embodiments, the correspondence between the one CGO and the one or more SSB indices satisfies at least one of: one CGO corresponding to one SSB index; or one CGO corresponding to a plurality of SSB indices.

In some embodiments, in response to the one CGO corresponding to the plurality of SSB indices, the method further includes: sending third information to the target cell, in which the third information indicates a first SSB index, and the first SSB index is one of the plurality of SSB indices corresponding to the one CGO.

In some embodiments, the third information is the second information.

In some embodiments, mapping the SSB index to the CGO in the order of the DMRS CDM group index, the DMRS port index, the DMRS sequence number, the CGO time domain index and the CGO frequency domain index includes: mapping the CGO to the SSB index corresponding to the beam in an ascending order of the DMRS CDM group index; after completing the mapping of the DMRS CDM group index, mapping the CGO to the SSB index corresponding to the beam in an ascending order of the DMRS port index; after completing the mapping of the DMRS port index, mapping the CGO to the SSB index corresponding to the beam in an ascending order of the DMRS sequence number; after completing the mapping of the DMRS sequence number, mapping the CGO to the SSB index corresponding to the beam in an ascending order of the CGO frequency domain index; and after completing the mapping of the CGO frequency domain index, mapping the CGO to the SSB index corresponding to the beam in an ascending order of the CGO time domain index.

In some embodiments, the method further includes: in response to an existence of an SSB index not mapped to the CGO after completing one mapping of the SSB index to the CGO based on the first mapping manner or the second mapping manner; mapping, based on the first mapping manner or the second mapping manner, the SSB index not mapped to the CGO to other CGOs in a mapping period in sequence, in which the mapping period includes N CGO periods, the other CGOs are CGOs to which no SSB index is mapped, and the completed mapping refers to the completed one mapping between the SSB index and the CGO.

FIG. 4A is a flowchart illustrating a method for determining a resource according to an embodiment of the disclosure. As shown in FIG. 4A, embodiments of the disclosure relate to a method for determining a resource. The method includes the following steps S4101 to S4106.

At step S4101, first information is sent.

For optional implementations of step S4101, reference may be made to optional implementations of step S2101 in FIG. 2A, optional implementations of step S3101 in FIG. 3A, and other related parts in the embodiments involved in FIG. 2A, FIG. 2B, FIG. 2C, FIG. 2D, FIG. 2E, and FIG. 3A, which is not repeated herein.

At step S4102, a first report is obtained.

For optional implementations of step S4102, reference may be made to optional implementations of step S2103 in FIG. 2A, optional implementations of step S3103 in FIG. 3A, and other related parts in the embodiments involved in FIG. 2A, FIG. 2B, FIG. 2C, FIG. 2D, FIG. 2E, and FIG. 3A, which is not repeated herein.

At step S4103, it is determined whether to perform cell switching.

For optional implementations of step S4103, reference may be made to optional implementations of step S2104 in FIG. 2A and other related parts in the embodiments involved in FIG. 2A, FIG. 2B, FIG. 2C, FIG. 2D, and FIG. 2E, which is not repeated herein.

At step S4104, a first instruction is sent.

For optional implementations of step S4104, reference may be made to optional implementations of step S2105 in FIG. 2A, optional implementations of step S3104 in FIG. 3A, and other related parts in the embodiments involved in FIG. 2A, FIG. 2B, FIG. 2C, FIG. 2D, FIG. 2E, and FIG. 3A, which is not repeated herein.

At step S4105, second information is obtained.

For optional implementations of step S4105, reference may be made to optional implementations of step S2106 in FIG. 2A, optional implementations of step S3105 in FIG. 3A, and other related parts in the embodiments involved in FIG. 2A, FIG. 2B, FIG. 2C, FIG. 2D, FIG. 2E, and FIG. 3A, which is not repeated herein.

At step S4106, third information is obtained.

For optional implementations of step S4106, reference may be made to optional implementations of step S2107 in FIG. 2A, optional implementations of step S3106 in FIG. 3A, and other related parts in the embodiments involved in FIG. 2A, FIG. 2B, FIG. 2C, FIG. 2D, FIG. 2E, and FIG. 3A, which is not repeated herein.

The method for determining a resource involved in the embodiments of the disclosure may include at least one of step S4101 to step S4106. For example, the step S4101 may be implemented as an independent embodiment, the step S4102 may be implemented as an independent embodiment, the step S4103 may be implemented as an independent embodiment, the step S4101 and the step S4102 may be implemented as an independent embodiment, the step S4101 and the step S4103 may be implemented as an independent embodiment, the step S4101 and the step S4102 and the step S4105 may be implemented as an independent embodiment, the step S4101 and the step S4102 and the step S4106 may be implemented as an independent embodiment, the step S4101 and the step S4102 and the step S4103 and the step S4104 and the step S4105 and the step S4106 may be implemented as an independent embodiment, but is not limited herein.

In some embodiments, the step S4101 and the step S4102 may be exchanged in order or performed simultaneously, the step S4103 and the step S4104 may be exchanged in order or performed simultaneously, and the step S4106 and the step S4105 may be exchanged in order or performed simultaneously.

In some embodiments, the step S4102, the step S4103, the step S4104, the step S4105, and the step S4106 are optional, and one or more of the steps may be omitted or substituted in different embodiments.

In some embodiments, the step S4101, the step S4103, the step S4104, the step S4105, and the step S4106 are optional, and one or more of the steps may be omitted or substituted in different embodiments.

In some embodiments, the step S4101, the step S4102, the step S4104, the step S4105, and the step S4106 are optional, and one or more of the steps may be omitted or substituted in different embodiments.

In some embodiments, the step S4101, the step S4102, the step S4103, the step S4105, and the step S4106 are optional, and one or more of the steps may be omitted or substituted in different embodiments.

In some embodiments, the step S4101, the step S4102, the step S4103, the step S4104, and the step S4106 are optional, and one or more of the steps may be omitted or substituted in different embodiments.

In some embodiments, the step S4101, the step S4102, the step S4103, the step S4104, and the step S4105 are optional, and one or more of the steps may be omitted or substituted in different embodiments.

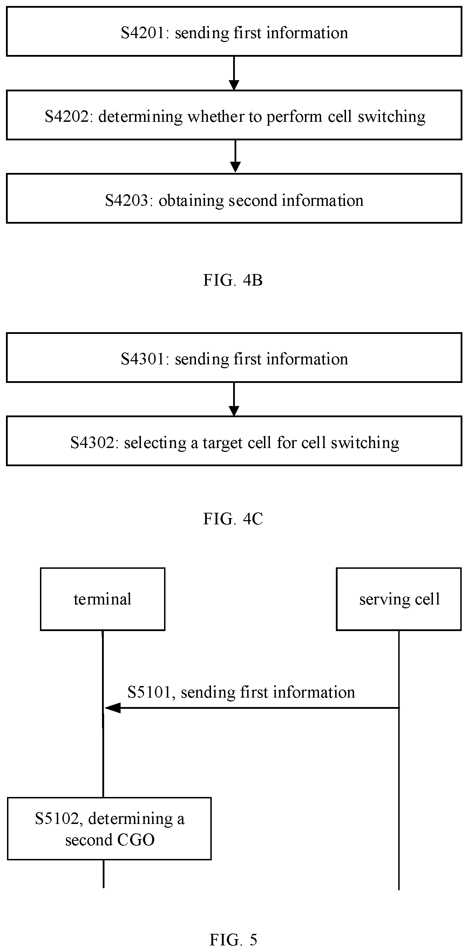

FIG. 4B is a flowchart illustrating a method for determining a resource according to an embodiment of the disclosure. As shown in FIG. 4B, embodiments of the disclosure relate to a method for determining a resource. The method includes the following steps S4201 to S4203.

At step S4201, first information is sent.

For optional implementations of step S4201, reference may be made to step S2101 in FIG. 2A, optional implementations of step S3101 in FIG. 3A, step S3201 in FIG. 3B, and step S4101 in FIG. 4A, and other related parts in the embodiments involved in FIG. 2A, FIG. 2B, FIG. 2C, FIG. 2D, FIG. 2E, FIG. 3A, FIG. 3B, and FIG. 4A, which is not repeated herein.

At step S4202, it is determined whether to perform cell switching.

For optional implementations of step S4202, reference may be made to step S2104 in FIG. 2A and step S4103 in FIG. 4A, and other related parts in the embodiments involved in FIG. 2A, FIG. 2B, FIG. 2C, FIG. 2D, FIG. 2E, and FIG. 4A, which is not repeated herein.

At step S4203, second information is obtained.

For optional implementations of step S4203, reference may be made to step S2106 in FIG. 2A, optional implementations of steps S3103 to S3106 in FIG. 3A, step S3203 in FIG. 3B, step S4104 in FIG. 4A, and step S4105 in FIG. 4A, and other related parts in the embodiments involved in FIG. 2A, FIG. 2B, FIG. 2C, FIG. 2D, FIG. 2E, FIG. 3A, FIG. 3B, and FIG. 4A, which is not repeated herein.

The communication method involved in the embodiments of the disclosure may include at least one of step S4201 to step S4203. For example, the step S4201 may be implemented as an independent embodiment, and the step S4202 may be implemented as an independent embodiment, but is not limited herein.

In some embodiments, the step S4201 and the step S4202 are optional, and one or more of the steps may be omitted or substituted in different embodiments.

In some embodiments, the step S4201 and the step S4203 are optional, and one or more of the steps may be omitted or substituted in different embodiments.

In some embodiments, the step S4202 and the step S4203 are optional, and one or more of the steps may be omitted or substituted in different embodiments.

In an embodiment of the disclosure, the step S4201 may be combined with steps S4102 to S4103 in FIG. 4A, and the step S4202 may be combined with the step S4101, the step S4102, and the step S4103 in FIG. 4A.

FIG. 4C is a flowchart illustrating a method for determining a resource according to an embodiment of the disclosure. As shown in FIG. 4C, embodiments of the disclosure relate to a method for determining a resource. The method includes the following steps S4301 to S4302.

At step S4301, first information is sent.

For optional implementations of step S4301, reference may be made to step S2101 in FIG. 2A, optional implementations of step S3101 in FIG. 3A, step S3201 in FIG. 3B, step S3301 in FIG. 3C, step S4101 in FIG. 4A, and step S4201 in FIG. 4B, and other related parts in the embodiments involved in FIG. 2A, FIG. 2B, FIG. 2C, FIG. 2D, FIG. 2E, FIG. 3A, FIG. 3B, FIG. 4A, and FIG. 4B, which is not repeated herein.

At step S4302, a target cell for cell switching is selected.

For optional implementations of step S4302, reference may be made to steps S2104 to S2107 in FIG. 2A, optional implementations of steps S3102 to S3106 in FIG. 3A, steps S3202 to S3203 in FIG. 3B, step S3302 in FIG. 3C, steps S4102 to S4106 in FIG. 4A, and steps S4202 to S4203 in FIG. 4B, and other related parts in the embodiments involved in FIG. 2A, FIG. 2B, FIG. 2C, FIG. 2D, FIG. 2E, FIG. 3A, FIG. 3B, FIG. 4A, and FIG. 4B, which is not repeated herein.

In some embodiments, the method includes: sending first information to a terminal, in which the first information is used to configure a first CGO for one or more candidate cells; and selecting, based on one or more beam measurement results, a target cell from the one or more candidate cells for cell switching, in which the target cell corresponds to a second CGO, the second CGO is configured for the terminal to send second information to the target cell, and the second information indicates that the terminal confirms switching to the target cell.

In some embodiments, the first information includes at least one of: time-frequency resource configuration information of a CGO of the one or more candidate cells; or a mapping relationship between a CGO of the one or more candidate cells and an SSB index corresponding to a beam.

In some embodiments, the time-frequency resource configuration information of the CGO includes at least one of: a configuration information set of a CG PUSCH, in which the configuration information set of the CG PUSCH includes one or more pieces of configuration information, and each piece of configuration information is configured with one CGO; a repetition number of one CGO, in which the repetition number includes at least one of a first repetition number or a second repetition number, the first repetition number indicates a repetition number of the one CGO in a time domain, and the second repetition number indicates a repetition number of the one CGO in a frequency domain; or time-frequency resource block information and a number of CGOs, in which the time-frequency resource block information includes at least one of time domain resource block information or frequency domain resource block information, the number of CGOs includes at least one of a first number or a second number, the time domain resource block information indicates total time domain resources occupied by the first number of CGOs within a first time domain resource range, and the frequency domain resource block information indicates total frequency domain resources occupied by the second number of CGOs within a first frequency domain resource range.

In some embodiments, in a case that the one CGO is repeated in the time domain by the first repetition number, at least one of the following is satisfied: repeated CGOs are allowed to be located in a same time unit; or repeated CGOs are not allowed to be located in a same time unit; and in a case that the one CGO is repeated in the frequency domain by the second repetition number, at least one of the following is satisfied: repeated CGOs are allowed to be located in the same frequency domain resource unit; or repeated CGOs are not allowed to be located in the same frequency domain resource unit.

In some embodiments, the first information further includes a first parameter, and the first parameter indicates an interval between the repeated CGOs located in the same time unit.

In some embodiments, the first information does not include a first parameter, and the repeated CGOs are not allowed to be located in the same time unit.

In some embodiments, the time domain resource block information includes at least one of: a period of the CG PUSCH; a time domain offset; a number of time units; or a number of CGOs included in each time unit.

In some embodiments, the frequency domain resource block information includes at least one of: a physical resource block offset of a starting position of a frequency domain resource; a first frequency domain resource range; or a number of CGOs frequency-division multiplexed in the first frequency domain resource.

In some embodiments, the mapping relationship between the CGO and the beam is determined by at least one of: mapping the SSB index to the CGO in an order of a CGO time domain index and a CGO frequency domain index; mapping the SSB index to the CGO in an order of a DMRS CDM group index, a DMRS port index, a DMRS sequence number, a CGO time domain index and a CGO frequency domain index; or mapping the SSB index to the CGO based on a mapping relationship configured by a network, in which the mapping relationship indicates a correspondence between one CGO and one or more SSB indices.

In some embodiments, the correspondence between the one CGO and the one or more SSB indices satisfies at least one of: one CGO corresponding to one SSB index; or one CGO corresponding to a plurality of SSB indices.

In some embodiments, in response to the one CGO corresponding to the plurality of SSB indices, the method further includes: receiving third information, in which the third information indicates a first SSB index, and the first SSB index is one of the plurality of SSB indices corresponding to the one CGO.

In some embodiments, the third information is the second information.

In some embodiments, mapping the SSB index to the CGO in the order of the DMRS CDM group index, the DMRS port index, the DMRS sequence number, the CGO time domain index and the CGO frequency domain index includes: mapping the CGO to the SSB index corresponding to the beam in an ascending order of the DMRS CDM group index; after completing the mapping of the DMRS CDM group index, mapping the CGO to the SSB index corresponding to the beam in an ascending order of the DMRS port index; after completing the mapping of the DMRS port index, mapping the CGO to the SSB index corresponding to the beam in an ascending order of the DMRS sequence number; after completing the mapping of the DMRS sequence number, mapping the CGO to the SSB index corresponding to the beam in an ascending order of the CGO frequency domain index; and after completing the mapping of the CGO frequency domain index, mapping the CGO to the SSB index corresponding to the beam in an ascending order of the CGO time domain index.

In some embodiments, the method further includes: in response to an existence of an SSB index not mapped to the CGO after completing one mapping of the SSB index to the CGO based on the first mapping manner or the second mapping manner; mapping, based on the first mapping manner or the second mapping manner, the SSB index not mapped to the CGO to other CGOs in a mapping period in sequence, in which the mapping period includes N CGO periods, the other CGOs are CGOs to which no SSB index is mapped, and the completed mapping is the completed one mapping between the SSB index and the CGO.

FIG. 5 is an interaction schematic diagram illustrating a method for determining a resource according to an embodiment of the disclosure. As shown in FIG. 5, embodiments of the disclosure relate to a method for determining a resource. The method includes the following steps S5101 to S5102.

At step S5101, a serving cell sends first information to a terminal.

For optional implementations of step S5101, reference may be made to step S2101 in FIG. 2A, step S3101 in FIG. 3A, optional implementations of step S3201 in FIG. 3B, step S3301 in FIG. 3C, step S4101 in FIG. 4A, step S4201 in FIG. 4B, and step S4301 in FIG. 4C, and other related parts in the embodiments involved in FIG. 2, FIG. 3A, FIG. 3B, FIG. 3C, FIG. 4A, FIG. 4B, and FIG. 4C, which is not repeated herein.

At step S5102, the terminal determines a second CGO.

For optional implementations of step S5102, reference may be made to step S2102 in FIG. 2A, step S3102 in FIG. 3A, optional implementations of step S3202 in FIG. 3B, and step S3302 in FIG. 3C, and other related parts in the embodiments involved in FIG. 2, FIG. 3A, FIG. 3B, and FIG. 3C, which is not repeated herein.

In some embodiments, the above method may include the methods described in the embodiments of the communication system side, the terminal side, the network device side, etc., which is not repeated herein.

The present embodiment also provides a method for determining a resource, for sending a confirmation message to a target cell during a switching process, so as to access the target cell and complete the switching.

In some embodiments, the method for determining a resource includes: a configuration manner of a CGO of a target/candidate cell, and a design of a mapping relationship between the CGO and a beam.

In some embodiments, the configuration manner of the CGO of the target/candidate cell includes at least one of the following.
- A) In pre-configuration information of each candidate cell, a CG PUSCH configuration list is configured, including a plurality of CG PUSCH configurations. Each piece of configuration information includes a time-frequency resource configuration.
- B) A repetition number is introduced into a resource configuration of the CG PUSCH.
   For example, reference may be made to embodiments of FIG. 2B and related descriptions of FIG. 2D, which is not repeated herein.
- C) A block of resources is specified, and a number of CGOs is specified.

In some embodiments, for -B), at least one of the following cases is included: -a) only inter-slot repetition is considered, i.e., repetition only considers inter-slot repetition as shown in FIG. 2B; or -b) both intra-slot repetition and inter-slot repetition are considered, as shown in FIG. 3. Thus, a parameter indicating whether to perform intra-slot repetition may be introduced. For example, introducing an interval parameter K for intra-slot repetition may be considered. If K is not configured, i.e., the parameter K is absent, it is considered that intra-slot repetition is not allowed; if K is configured, it indicates that intra-slot repetition is allowed, and a specific value of the K is a time interval of repetition, such as K=0, 1, ..., N symbol(s), or other indication parameters.

For example, reference may be made to related descriptions of the embodiment of FIG. 2C, which is not repeated herein.

In some embodiments, for -C), at least one of the following cases is included: -a) time domain resource: a period and an offset of the CG PUSCH determine an absolute time domain position of a resource. Then, definitions of a number of slots and a number of CGO per slot are introduced to determine a number of slots occupied by the time domain resource and a number of CGOs in each slot; or -b) frequency domain resource: a PRB offset of the frequency domain resource; an allocated frequency domain resource (which may default to an entire BWP); and a number of CGOs frequency-division multiplexed in the frequency domain resource.

In some embodiments, the design of the mapping relationship between the CGO and the beam includes at least one of: 1) performing a mapping according to a CGO frequency domain index and a CGO time domain index, as shown in the following figure. In this case, a case that one CGO corresponds to a plurality of SSB indices is not considered. If there are many SSBs, a mapping period may be set to N times a CGO period; 2) designing a correspondence with an SSB based on a DMRS index and a time-frequency resource, as in small data transmission (SDT); 3) same as 1), performing a mapping first according to the CGO frequency domain index and then the time domain index. In this case, a case that one CGO corresponds to a plurality of SSB indices is allowed; or 4) configuring, by a network, a mapping relationship.

In some embodiments, for an exemplary description of 1), reference may be made to FIG. 2E and related embodiment descriptions, which is not repeated herein.

In some embodiments, for 2), a CDM group index mapping is added, i.e., an ascending order of the CDM group is prioritized, followed by an ascending order of the DMRS port, and finally an ascending order of a sequence.

It may be understood that, a detection of the CDM group is simpler, and only the received power of a corresponding RE needs to be detected. If the RO needs to correspond to more SSBs, port and sequence are further used for differentiation.

It may be understood that, for 3), when one CGO corresponds to a plurality of SSB indices, dedicated information may be directly introduced in first UL data to inform a network which one of the plurality of corresponding SSBs is specifically used.

In some embodiments, when a CG PUSCH resource is configured based on option 1, an SSB index to be mapped thereto also needs to be specified in each configuration.

In some embodiments, the SSB index to be mapped is specified based on at least one of the following manners: in a case that one SSB index corresponds to a plurality of CGOs is supported; or in a case that one or more SSB indices correspond to a plurality of CGOs is supported. In this case, in addition to configuring the SSB index corresponding to the CGO, other resources corresponding to the SSB index, such as a DMRS CDM group index, a DMRS port index, etc., also need to be further configured in the configuration of the CGO, so as to further distinguish a specific SSB index.

In embodiments of the disclosure, some or all of the steps and optional implementations may be arbitrarily combined with some or all of the steps in other embodiments, or may be arbitrarily combined with optional implementations of other embodiments.

The embodiments of the disclosure also provide an apparatus for implementing any one of the above methods. For example, an apparatus is provided, including units or modules for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be understood that a division of units or modules in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Alternatively, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

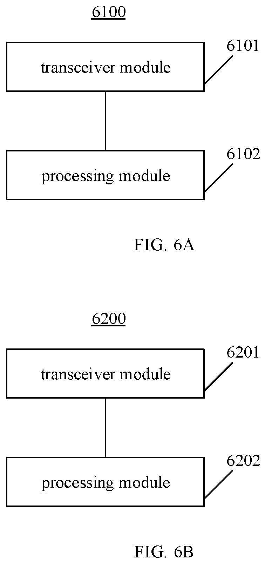

FIG. 6A is a block diagram illustrating a terminal according to an embodiment of the disclosure. As shown in FIG. 6A, the terminal 6100 may include at least one of: a transceiver module 6101, or a processing module 6102. In some embodiments, the transceiver module is configured to receive, by a terminal, first information sent by a serving cell, in which the first information is used to configure a first CGO for one or more candidate cells. The processing module is configured to determine, based on the first information, a second CGO for a target cell, in which the second CGO is configured for the terminal to send second information to the target cell. Optionally, the transceiver module is configured to perform at least one of the communication steps (e.g., S2101, S2103, S2105, S2106 and S2107, but is not limited herein) such as sending and/or receiving performed by the terminal in any of the above methods, which is not repeated herein. Optionally, the processing module is configured to perform at least one of other steps (e.g., S2102, but is not limited herein) performed by the terminal 101 in any of the above methods, which is not repeated herein.

FIG. 6B is a block diagram illustrating a network device according to an embodiment of the disclosure. As shown in FIG. 6B, the network device 6200 may include at least one of: a transceiver module 6201, or a processing module 6202. In some embodiments, the transceiver module is configured to send first information to a terminal, in which the first information is used to configure a first CGO for one or more candidate cells. The processing module is configured to select, based on beam measurement results, a target cell from the one or more candidate cells for cell switching. Optionally, the transceiver module is configured to perform at least one of the communication steps (e.g., S2101, S2103, S2105, S2106 and S2107, but is not limited herein) such as sending and/or receiving performed by the terminal in any of the above methods, which is not repeated herein. Optionally, the processing module is configured to perform at least one of other steps (e.g., S2104, but is not limited herein) performed by the terminal 101 in any of the above methods, which is not repeated herein.

In some embodiments, the transceiver module may include a sending module and/or a receiving module. The sending module and the receiving module may be separate or may be integrated. Optionally, the transceiver module may be interchangeable with a transceiver.

In some embodiments, the processing module may be a single module, or may include a plurality of sub-modules. Optionally, the plurality of sub-modules respectively perform all or part of the steps required to be performed by the processing module. Optionally, the processing module may be interchangeable with a processor.

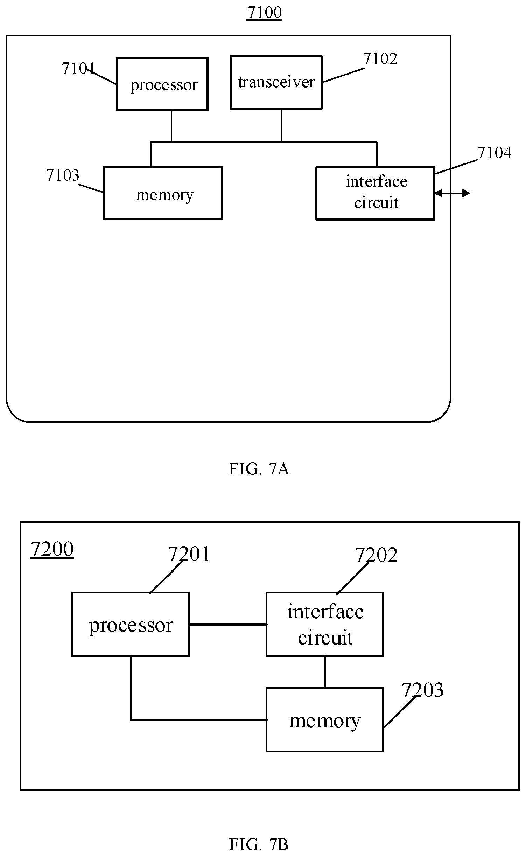

FIG. 7A is a block diagram illustrating a communication device 7100 according to an embodiment of the disclosure. The communication device 7100 may be a network device (e.g., an access network device, a core network device, etc.), or a terminal (e.g., a UE, etc.), or a chip, a chip system, a processor, etc. that supports the network device to implement any one of the methods, or a chip, a chip system, a processor, etc. that supports the terminal to implement any one of the methods. The communication device 7100 may be configured to implement the method in the above method embodiments. For details, reference may be made to the description in the above method embodiments.

As shown in FIG. 7A, the communication device 7100 may include one or more processors 7101. The processor 7101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute programs, and process program data. The communication device 7100 is configured to execute any one of the above methods. Optionally, the one or more processors 7101 are used to invoke instructions to cause the communication device 7100 to perform any of the above methods.

In some embodiments, the communication device 7100 further includes one or more transceivers 7102. When the communication device 7100 includes one or more transceivers 7102, the transceiver 7102 performs at least one of the communication steps (e.g., S2102, S2103, but is not limited herein) such as sending and/or receiving in the above method, and the processor 7101 performs at least one of other steps (e.g., S2101, but is not limited herein). In optional embodiments, the transceiver may include a receiver and a transmitter, which may be separate or integrated together. Optionally, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 7100 further includes one or more memories 7103 for storing data. Optionally, all or some of the memories 7103 may also be located outside the communication device 7100. In optional embodiments, the communication device 7100 further includes one or more interface circuits 7104. Optionally, the interface circuit 7104 is connected to the memory 7103. The interface circuit 7104 may be configured to receive data from the memory 7103 or other devices, and may be configured to send data to the memory 7103 or other devices. For example, the interface circuit 7104 may read data stored in the memory 7103 and send the data to the processor 7101.

The communication device 7100 in the above embodiments may be a network device or a terminal, but a scope of the communication device 7100 in the disclosure is not limited to this, and a structure of the communication device 7100 may not be limited by FIG. 7A. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 7B is a block diagram illustrating a chip 7200 according to an embodiment of the disclosure. For a case where the communication device 7100 may be a chip or a chip system, reference may be made to the block diagram of the chip 7200 shown in FIG. 7B, but not limited to this.

The chip 7200 includes one or more processors 7201. The chip 7200 is configured to execute any one of the above methods.

In some embodiments, the chip 7200 further includes one or more interface circuits 7202. Optionally, the terms such as interface circuit, interface, transceiver pin, transceiver, etc. may be used interchangeably. In some embodiments, the chip 7200 further includes one or more memories 7203 for storing data. Optionally, all or some of the memories 7203 may be located outside the chip 7200. Optionally, the interface circuit 7202 is connected to a memory 7203. The interface circuit 7202 may be configured to receive data from the memory 7203 or other devices, and may be configured to send data to the memory 7203 or other devices. For example, the interface circuit 7202 may read data stored in the memory 7203 and send data to the processor 7201.

In some embodiments, the interface circuit 7202 performs at least one of the communication steps such as sending and/or receiving in the above method (e.g., S2102, S2103, but is not limited herein). The interface circuit 7202 performing communication steps such as sending and/or receiving in the above method means, for example: the interface circuit 7202 performs data interaction between the processor 7201, the chip 7200, the memory 7203, or a transceiver device. In some embodiments, the processor 7201 performs at least one of other steps (e.g., S2101, but is not limited herein).

In various embodiments of virtual devices, physical devices, chips, and the like, the modules and/or components described may be arbitrarily combined or separated as required. Optionally, some or all steps may also be executed collaboratively by multiple modules and/or components, and no specific limitations are imposed herein.

The disclosure also provides a storage medium for storing instructions. When the instructions are running on the communication device 7100, the communication device 7100 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may also be a transitory storage medium.

The disclosure also provides a program product. When the program product is executed by the communication device 7100, the communication device 7100 is caused to implement any one of the above methods. Optionally, the above program product is a computer program product.

The disclosure also provides a computer program. When the computer program is running on a computer, the computer is caused to implement any one of the above methods.

## Claims

1. A method for determining a resource, comprising:
receiving, by a terminal, first information sent by a serving cell, wherein the first information is used to configure a first configured grant occasion (CGO) for one or more candidate cells; and
determining, based on the first information, a second CGO for a target cell, wherein the second CGO is configured for the terminal to send second information to the target cell,
wherein the target cell is a cell selected by the serving cell from the one or more candidate cells for cell switching based on one or more beam measurement results, and the second information indicates that the terminal confirms switching to the target cell.

2. The method according to claim 1, wherein the first information comprises at least one of:
time-frequency resource configuration information of a CGO of the one or more candidate cells; or
a mapping relationship between a CGO of the one or more candidate cells and a synchronization signal block (SSB) index corresponding to a beam.

3. The method according to claim 2, wherein the time-frequency resource configuration information of the CGO comprises at least one of:
a configuration information set of a CG physical uplink shared channel (PUSCH), wherein the configuration information set of the CG PUSCH comprises one or more pieces of configuration information, and each piece of configuration information is configured with one CGO;
a repetition number of one CGO, wherein the repetition number comprises at least one of a first repetition number or a second repetition number, the first repetition number indicates a repetition number of the one CGO in a time domain, and the second repetition number indicates a repetition number of the one CGO in a frequency domain; or
time-frequency resource block information and a number of CGOs, wherein the time-frequency resource block information comprises at least one of time domain resource block information or frequency domain resource block information, the number of CGOs comprises at least one of a first number or a second number, the time domain resource block information indicates total time domain resources occupied by the first number of CGOs within a first time domain resource range, and the frequency domain resource block information indicates total frequency domain resources occupied by the second number of CGOs within a first frequency domain resource range.

4. The method according to claim 3, wherein in a case that the one CGO is repeated in the time domain by the first repetition number, at least one of the following is satisfied: repeated CGOs are allowed to be located in a same time unit; or repeated CGOs are not allowed to be located in a same time unit.

5. The method according to claim 4, wherein the first information further comprises a first parameter, and
the first parameter indicates an interval between the repeated CGOs located in the same time unit.

6. The method according to claim 4 or 5, wherein the first information does not comprise a first parameter, and the repeated CGOs are not allowed to be located in the same time unit.

7. The method according to claim 3, wherein the time domain resource block information comprises at least one of:
a period of the CG PUSCH;
a time domain offset;
a number of time units; or
a number of CGOs comprised in each time unit.

8. The method according to claim 3, wherein the frequency domain resource block information comprises at least one of:
a physical resource block offset of a starting position of a frequency domain resource;
the first frequency domain resource range; or
a number of CGOs frequency-division multiplexed in the first frequency domain resource.

9. The method according to any one of claims 2 to 8, wherein the mapping relationship between the CGO and the beam is determined by at least one of the following manners:
a first mapping manner, wherein the first mapping manner is to map the SSB index to the CGO in an order of a CGO time domain index and a CGO frequency domain index;
a second mapping manner, wherein the second mapping manner is to map the SSB index to the CGO in an order of a demodulation reference signal (DMRS) code division multiplexing (CDM) group index, a DMRS port index, a DMRS sequence number, a CGO time domain index and a CGO frequency domain index; or
a third mapping manner, wherein the third mapping manner is to map the SSB index to the CGO based on a mapping relationship configured by a network,
wherein the mapping relationship indicates a correspondence between one CGO and one or more SSB indices.

10. The method according to claim 9, wherein the correspondence between the one CGO and the one or more SSB indices satisfies at least one of:
one CGO corresponding to one SSB index; or
one CGO corresponding to a plurality of SSB indices.

11. The method according to claim 10, wherein in response to the one CGO corresponding to the plurality of SSB indices, the method further comprises:
sending third information to the target cell, wherein the third information indicates a first SSB index, and the first SSB index is one of the plurality of SSB indices corresponding to the one CGO.

12. The method according to claim 11, wherein the third information is the second information.

13. The method according to claim 9, wherein mapping the SSB index to the CGO in the order of the DMRS CDM group index, the DMRS port index, the DMRS sequence number, the CGO time domain index and the CGO frequency domain index comprises:
mapping the CGO to the SSB index corresponding to the beam in an ascending order of the DMRS CDM group index;
after completing the mapping of the DMRS CDM group index, mapping the CGO to the SSB index corresponding to the beam in an ascending order of the DMRS port index;
after completing the mapping of the DMRS port index, mapping the CGO to the SSB index corresponding to the beam in an ascending order of the DMRS sequence number;
after completing the mapping of the DMRS sequence number, mapping the CGO to the SSB index corresponding to the beam in an ascending order of the CGO frequency domain index; and
after completing the mapping of the CGO frequency domain index, mapping the CGO to the SSB index corresponding to the beam in an ascending order of the CGO time domain index.

14. The method according to any one of claims 9 to 13, further comprising:
in response to an existence of an SSB index not mapped to the CGO after completing one mapping of the SSB index to the CGO based on the first mapping manner or the second mapping manner,
mapping, based on the first mapping manner or the second mapping manner, the SSB index not mapped to the CGO to other CGOs in a mapping period in sequence,
wherein the mapping period comprises N CGO periods, the other CGOs are CGOs to which no SSB index is mapped, and the completed mapping refers to the completed one mapping between the SSB index and the CGO.

15. A method for determining a resource, comprising:
sending first information to a terminal, wherein the first information is used to configure a first configured grant occasion (CGO) for one or more candidate cells; and
selecting, based on one or more beam measurement results, a target cell from the one or more candidate cells for cell switching,
wherein the target cell corresponds to a second CGO, the second CGO is configured for the terminal to send second information to the target cell, and the second information indicates that the terminal confirms switching to the target cell.

16. The method according to claim 15, wherein the first information comprises at least one of:
time-frequency resource configuration information of a CGO of the one or more candidate cells; or
a mapping relationship between the CGO of the one or more candidate cells and a synchronization signal block (SSB) index corresponding to a beam.

17. The method according to claim 16, wherein the time-frequency resource configuration information of the CGO comprises at least one of:
a configuration information set of a CG PUSCH, wherein the configuration information set of the CG PUSCH comprises one or more pieces of configuration information, and each piece of configuration information is configured with one CGO;
a repetition number of one CGO, wherein the repetition number comprises at least one of a first repetition number or a second repetition number, the first repetition number indicates a repetition number of the one CGO in a time domain, and the second repetition number indicates a repetition number of the one CGO in a frequency domain; or
time-frequency resource block information and a number of CGOs, wherein the time-frequency resource block information comprises at least one of time domain resource block information or frequency domain resource block information, the number of CGOs comprises at least one of a first number or a second number, the time domain resource block information indicates total time domain resources occupied by the first number of CGOs within a first time domain resource range, and the frequency domain resource block information indicates total frequency domain resources occupied by the second number of CGOs within a first frequency domain resource range.

18. The method according to claim 17, wherein in a case that the one CGO is repeated in the time domain by the first repetition number, at least one of the following is satisfied: repeated CGOs are allowed to be located in a same time unit; or repeated CGOs are not allowed to be located in a same time unit; and
in a case that the one CGO is repeated in the frequency domain by the second repetition number, at least one of the following is satisfied: repeated CGOs are allowed to be located in a same frequency domain resource unit; or repeated CGOs are not allowed to be located in a same frequency domain resource unit.

19. The method according to claim 18, wherein the first information further comprises a first parameter, and
the first parameter indicates an interval between the repeated CGOs located in the same time unit.

20. The method according to claim 18 or 19, wherein the first information does not comprise a first parameter, and the repeated CGOs are not allowed to be located in the same time unit.

21. The method according to claim 17, wherein the time domain resource block information comprises at least one of:
a period of the CG PUSCH;
a time domain offset;
a number of time units; or
a number of CGOs comprised in each time unit.

22. The method according to claim 17, wherein the frequency domain resource block information comprises at least one of:
a physical resource block offset of a starting position of a frequency domain resource;
a first frequency domain resource range; or
a number of CGOs frequency-division multiplexed in the first frequency domain resource.

23. The method according to any one of claims 16 to 22, wherein the mapping relationship between the CGO and the beam is determined by at least one of:
mapping the SSB index to the CGO in an order of a CGO time domain index and a CGO frequency domain index;
mapping the SSB index to the CGO in an order of a demodulation reference signal (DMRS) code division multiplexing (CDM) group index, a DMRS port index, a DMRS sequence number, a CGO time domain index and a CGO frequency domain index; or
mapping the SSB index to the CGO based on a mapping relationship configured by a network,
wherein the mapping relationship indicates a correspondence between one CGO and one or more SSB indices.

24. The method according to claim 23, wherein the correspondence between the one CGO and the one or more SSB indices satisfies at least one of:
one CGO corresponding to one SSB index; or
one CGO corresponding to a plurality of SSB indices.

25. The method according to claim 24, wherein in response to the one CGO corresponding to the plurality of SSB indices, the method further comprises:
receiving third information, wherein the third information indicates a first SSB index, and the first SSB index is one of the plurality of SSB indices corresponding to the one CGO.

26. The method according to claim 25, wherein the third information is the second information.

27. The method according to claim 23, wherein mapping the SSB index to the CGO in the order of the DMRS CDM group index, the DMRS port index, the DMRS sequence number, the CGO time domain index and the CGO frequency domain index comprises:
mapping the CGO to the SSB index corresponding to the beam in an ascending order of the DMRS CDM group index;
after completing the mapping of the DMRS CDM group index, mapping the CGO to the SSB index corresponding to the beam in an ascending order of the DMRS port index;
after completing the mapping of the DMRS port index, mapping the CGO to the SSB index corresponding to the beam in an ascending order of the DMRS sequence number;
after completing the mapping of the DMRS sequence number, mapping the CGO to the SSB index corresponding to the beam in an ascending order of the CGO frequency domain index; and
after completing the mapping of the CGO frequency domain index, mapping the CGO to the SSB index corresponding to the beam in an ascending order of the CGO time domain index.

28. The method according to any one of claims 23 to 27, further comprising:
in response to an existence of an SSB index not mapped to the CGO after completing one mapping of the SSB index to the CGO;
mapping, based on a mapping manner for the completed mapping, the SSB index not mapped to the CGO to other CGOs in a mapping period in sequence,
wherein the mapping period comprises N CGO periods, the other CGOs are CGOs to which no SSB index is mapped, and the completed mapping is the completed one mapping between the SSB index and the CGO.

29. A method for determining a resource, comprising:
receiving, by a terminal, first information sent by a serving cell, wherein the first information is used to configure a first configured grant occasion (CGO) for one or more candidate cells;
determining, by a terminal, a second CGO for a target cell based on the first information, wherein the second CGO is configured for the terminal to send second information to the target cell,
wherein the target cell is a cell selected by the serving cell from the one or more candidate cells for cell switching based on one or more beam measurement results, and the second information indicates that the terminal confirms switching to the target cell.

30. A terminal, comprising:
a transceiver module, configured to receive, by a terminal, first information sent by a serving cell, wherein the first information is used to configure a first configured grant occasion (CGO) for one or more candidate cells; and
a processing module, configured to determine, based on the first information, a second CGO for a target cell, wherein the second CGO is configured for the terminal to send second information to the target cell,
wherein the target cell is a cell selected by the serving cell from the one or more candidate cells for cell switching based on one or more beam measurement results, and the second information indicates that the terminal confirms switching to the target cell.

31. A network device, comprising:
a transceiver module, configured to send first information to a terminal, wherein the first information is used to configure a first configured grant occasion (CGO) for one or more candidate cells; and
a processing module, configured to select, based on one or more beam measurement results, a target cell from the one or more candidate cells for cell switching,
wherein the target cell corresponds to a second CGO; the second CGO is configured for the terminal to send second information to the target cell; and the second information indicates that the terminal confirms switching to the target cell.

32. A terminal, comprising:
one or more processors,
wherein the one or more processors are configured to implement the method for determining a resource according to any one of claims 1 to 14.

33. A network device, comprising:
one or more processors,
wherein the one or more processors are configured to implement the method for determining a resource according to any one of claims 15 to 28.

34. A communication system, comprising:
a terminal, configured to implement the method for determining a resource according to any one of claims 1 to 14, and
a network device, configured to implement the method for determining a resource according to any one of claims 15 to 28.

35. A storage medium storing instructions which, when executed on a communication device, cause the communication device to perform the method for determining a resource according to any one of claims 1 to 14 or any one of claims 15 to 28.
